# EUROPEAN PATENT SPECIFICATION

(11) **EP 2 233 972 B1**
(45) Date of publication and mention of the grant of the patent: **18.01.2017**
(21) Application number: 08864962.9
(22) Date of filing: 18.12.2008
(51) Int. Cl.: H04N 9/31, G03B 21/20, G03B 33/12, G03B 33/06

(54) **PROJECTOR AND ILLUMINATION SYSTEM THEREFORE**
PROJEKTOR UND BELEUCHTUNGSVORRICHTUNG HIERFÜR
PROJECTEUR ET SYSTÈME D'ÉCLAIRAGE POUR CELUI-CI

(30) Priority: 20.12.2007 JP 2007328375; 16.09.2008 JP 2008236105
(43) Date of publication of application: 29.09.2010
(73) Proprietor: Seiko Epson Corporation, Shinjuku-ku Tokyo 163-0811 (JP)
(72) Inventor: SAKAI, Kenshi, Suwa-shi Nagano 392-8502 (JP)
(74) Representative: Hoffmann Eitle
(86) International application number: PCT/JP2008/003833
(87) International publication number: WO 2009/081552

(56) References cited:
- EP-A1- 0 563 874
- EP-A2- 1 455 538
- EP-A2- 1 480 465
- JP-A- 8 254 678
- JP-A- 10 206 815
- JP-A- 2004 226 814
- JP-A- 2005 017 772
- JP-A- 2005 017 772
- JP-A- 2005 345 604
- JP-A- 2007 279 332
- JP-B2- 3 640 367
- US-A1- 2003 025 886

## Description

### Technical Field

The present invention relates to a projector that uses a light modulator to modulate illumination light and projects the modulated image light.

### Background Art

A typical conventional projector includes: a light source that emits generally white light; an illumination optical system that equalizes and polarizes light from the light source; a color separation and light guide optical system that separates the light from the illumination optical system into three color lights (green, blue and red) and guides the lights into corresponding optical paths; three liquid crystal light valves each illuminated by the corresponding color illumination light; a cross dichroic prism that combines images from the three liquid crystal light valves; and a projection lens that enlarges and projects the combined image.

In such a projector, when the illuminance distributions of the lights illuminating the liquid crystal light valves are different from one another, deterioration of white balance, color unevenness or the like may occur in the projected image obtained by combining the lights. In order to avoid them, a method of equalizing the lengths of the optical paths of the separated green and blue lights and inserting a relay lens in the optical path of the red light to correct the illuminance distributions has been proposed (for example, see Patent Document 1). Also a method of setting the number of reflections in the individual optical paths to either an odd or even number to make the lengths of the individual optical paths be generally equal to one another, thereby making the illuminance distributions be generally equal to one another has been proposed (for example, see Patent Document 2).
Patent Document 1: JP-A-2005-345604
Patent Document 2: JP-A-8-254678
JP 2005/017772 relates to a projector device in which light from a light source is separated to light of three primary colors of red, blue, and green, and these primary color light rays are led to each liquid crystal display panel and are subjected to luminance modulation by using an input signal and are synthesized by a dichroic prism, and this synthesized light is projected in a magnified condition on a prescribed screen. An illuminating optical system wherein a combination mirror which inverts optical images of primary color light in refracting directions of optical paths is arranged is provided in a relay optical path for color separation. JP 3-640367 B2 and EP 1 480 465 A2 are further prior art.

### Disclosure of the Invention

However, for the projector such as disclosed in Patent Document 1, the lights illuminating the liquid crystal light valves in the blue and green optical paths and the light illuminating the liquid crystal light valve in the red optical path may be, for example, inverted in left-right direction, which makes it difficult to completely correct the illuminance distributions. Thus, when the intensity of illumination varies due to the fluctuation of the light emission point of the light source, the shift of component positions within the projector or other reasons, color unevenness occurs.

On the other hand, for the projector such as disclosed in Patent Document 2, the optical paths are complicated and the number of reflections of the lights increases, causing the illuminance to be reduced even when the illuminance distributions are equal to one another.

In view of the above, it is an object of the present invention to provide a projector that includes simplified optical systems capable of preventing illuminance reduction and relative invert of illuminance distribution.

In order to achieve this object, a first projector in accordance with the invention has the features of claim 1.

In short, in the first projector, when each of the first and second optical paths having lengths different from each other is replaced by a linear optical path, an inverted image of the illumination optical system is formed at the position of each of the first and second light modulators, and the difference between the number of the reflection surfaces existing in the first optical path and the number of the reflection surfaces existing in the second optical path is an even number. This can prevent the images of the illumination optical system each corresponding to each of the first and second color lights passing through the first and second optical paths from being inverted to each other when formed on the first and second light modulators and combined by the light combining optical system. That is, even though the second optical path is longer than the first optical path, the image of the illumination optical system corresponding to the first color light in the first optical path and the image of the illumination optical system corresponding to the second color light in the second optical path are combined such that their up-down and left-right directions are the same as each other in the image formation downstream from the light emission portion of the light combining optical system.

Note that the image of the illumination optical system means a real image of the illumination optical system actually or virtually formed at the position of the light modulator or a conjugate position downstream from the position of the light modulator, and is specifically an inverted image or up-down inverted image or the like of the illumination optical system. For example, when the illumination optical system includes first and second multi-lens and the like, the image of the illumination optical system has a contour or pattern corresponding to a plurality of element lenses included in the first multi-lens disposed at the conjugate position with respect to the light modulator. Note that the image of the illumination optical system is not formed at the light emission portion of the light combining optical system, but is formed on a screen to which the images from the light modulators are superimposed together and projected. Thus, making the up-down and left-right directions of the images of the illumination optical system be same as each other in the image formation downstream from the light emission portion of the light combining optical system when combining the images of the illumination optical system in the light combining optical system means superimposing together and projecting on the screen the images of the illumination optical system each corresponding to each of the first and second color lights passing through the first and second optical paths such that their up-down and left-right directions are the same as each other.

In terms of symmetry, the length of the first optical path is desirably equal to that of the second optical path. However, considering combining images, the second optical path may need to be longer. In such a case, conventionally, the magnification of the images of the illumination optical system formed on the light modulators are equalized by providing a relay lens on the longer optical path (hereinafter referred to as relay optical path). However, the relay lens may cause the projected images of the illumination optical system each corresponding to each color light to be inverted to each other, or the number of lenses may be increased by adding the relay lens to decrease the amount of light. On the other hand, in the projector in accordance with the invention, the images of the illumination optical system each corresponding to each of the first and second color lights passing through the first and second optical paths can be formed at the position of the corresponding light modulators so that the images of the illumination optical system of the first and second color lights passing through the first and second optical paths are not inverted to each other in the light emission side of the light combining optical system (more accurately, on the screen to which the images from the light modulators are superimposed together and projected) without increasing the number of lens over the conventional relay optical path configuration. Also, the magnification of the images of the illumination optical system formed at the positions of the light modulators can be equalized by previously controlling the relative image forming conditions of the first and second paths. This can reduce deterioration of white balance and color unevenness in the projected images of the projector even when the light emission distribution of the light source varies with time, for example.

Further, according to a specific aspect of the invention, in the projector: the light source emits light including third color light; the color separation and light guide optical system separates light emitted from the light source into the first color light, the second color light and the third color light; the light modulator further includes a third light modulator that is illuminated by the third color light separated by the color separation and light guide optical system; and the light combining optical system is a cross dichroic prism. The cross dichroic prism combines the first color light, the second color light and the third color light passing through the first light modulator, the second light modulator and the third light modulator and entering from a plurality of light entrance surfaces corresponding to the plurality of light receiving portions, respectively, and emitting the combined light from a light emission surface corresponding to the light emission portion. The length of a third optical path along which the third color light is guided from the illumination optical system through the third light modulator to the light emission surface corresponding to the light emission portion of the cross dichroic prism is equal to the length of the first optical path. The difference between the number of the reflection surfaces existing in the first optical path and the number of the reflection surfaces existing in the third optical path is an even number. When the third optical path is replaced by a linear optical path including none of the reflection surfaces, an inverted image of the illumination optical system is formed at the position of the third light modulator. In this case, since the length of the first optical path is equal to that of the third optical path, and the difference between the number of the reflection surfaces existing in the first optical path and the number of the reflection surfaces existing in the third optical path is an even number, the images of the illumination optical system each corresponding to each of the first and third color lights passing through the first and third optical paths are combined on the light emission side of the cross dichroic prism such that their up-down and left-right directions are the same as each other.

According to another aspect of the invention, the light source emits light including third color light; the color separation and light guide optical system separates light emitted from the light source into the first color light, the second color light and the third color light; the light modulator further includes a third light modulator that is illuminated by the third color light separated by the color separation and light guide optical system; and the light combining optical system is a cross dichroic prism. The cross dichroic prism combines the first color light, the second color light and the third color light passing through the first light modulator, the second light modulator and the third light modulator and entering from a plurality of light entrance surfaces corresponding to the plurality of light receiving portions, respectively, and emitting the combined light from a light emission surface corresponding to the light emission portion. The length of a third optical path along which the third color light is guided from the illumination optical system through the third light modulator to the light emission surface corresponding to the light emission portion of the cross dichroic prism is equal to the length of the second optical path. The difference between the number of the reflection surfaces existing in the second optical path and the number of the reflection surfaces existing in the third optical path is an even number. When the third optical path is replaced by a linear optical path including none of the reflection surfaces, an inverted image of the illumination optical system is formed at the position of the third light modulator. In this case, since the length of the second optical path is equal to that of the third optical path, and the difference between the number of the reflection surfaces existing in the second optical path and the number of the reflection surfaces existing in the third optical path is an even number, the images of the illumination optical system each corresponding to each of the second and third color lights passing through the second and third optical paths are combined on the light emission side of the cross dichroic prism such that their up-down and left-right directions are the same as each other.

According to another aspect of the invention, the illumination optical system includes a light dividing optical element that divides light emitted from the light source into a plurality of partial lights, and a superimposing optical system that superimposes the plurality of partial lights together on the first light modulator and the second light modulator. The superimposing optical system includes a first superimposing lens that superimposes together a plurality of partial lights of the first color light of the plurality of partial lights on the first light modulator, and a second superimposing lens that superimposes together a plurality of partial lights of the second color light of the plurality of partial lights on the second light modulator. The first superimposing lens is disposed at a position on the first optical path where the first optical path does not overlap with the second optical path. The second superimposing lens is disposed at a position on the second optical path where the second optical path does not overlap with the first optical path. In this case, the images of the illumination optical system formed on the individual light conversion devices on the first and second optical paths can be individually adjusted by individually adjusting the power and positions of the first and second superimposing lenses that are virtually standalone.

According to another aspect of the invention, the illumination optical system includes a light dividing optical element that divides light emitted from the light source into a plurality of partial lights, and a superimposing optical system that superimposes the plurality of partial lights together on the first light modulator, the second light modulator and the third light modulator. The superimposing optical system includes a first superimposing lens that superimposes together a plurality of partial lights of the first color light of the plurality of partial lights on the first light modulator and superimposing together a plurality of partial lights of the third color light of the plurality of partial lights on the third light modulator, and a second superimposing lens that superimposes together a plurality of partial lights of the second color light of the plurality of partial lights on the second light modulator. The first superimposing lens is disposed at a position on the first optical path where the first optical path overlaps with the third optical path and does not overlap with the second optical path. The second superimposing lens is disposed at a position on the second optical path where the second optical path does not overlap with the first optical path and the third optical path. In this case, the images of the illumination optical system formed on the individual light conversion devices on the first and second optical paths can be individually adjusted by individually adjusting the power and positions of the first and second superimposing lenses that are virtually standalone. Also, the number of lenses can be decreased by providing the first superimposing lens so as to be common to the first and third optical paths.

According to another aspect of the invention, at least one of the first superimposing lens and the second superimposing lens includes two or more lenses. In this case, for example, by providing a first lens and a second lens on the second optical path such that they function as a superimposing lens, the second superimposing lens disposed on the second optical path longer than the first optical path provides a focal length equivalent to that of the first superimposing lens disposed on the first and third optical paths. The second lens can also include two lenses, for example. In this case, two normal lenses can serve as a single precision lens.

According to another aspect of the invention, when the length of the second optical path is equal to that of the third optical path, the illumination optical system includes a light dividing optical element that divides light emitted from the light source into a plurality of partial lights, and a superimposing optical system that superimposes the plurality of partial lights together on the first light modulator and the second light modulator. The superimposing optical system includes a first superimposing lens that superimposes together a plurality of partial lights of the first color light of the plurality of partial lights on the first light modulator, and a second superimposing lens that superimposes together a plurality of partial lights of the second color light of the plurality of partial lights on the second light modulator. The first superimposing lens includes two or more lenses. The second superimposing lens includes two or more lenses. At least one lens included in the first superimposing lens is a common lens also included in the second superimposing lens. The common lens is disposed upstream from the position on which light emitted from the light source is separated into the color lights by the color separation and light guide optical system. In this case, at least one lens included in the first superimposing lens can be a common lens also included in the second superimposing lens to simplify the lens configuration of the optical paths.

According to another aspect of the invention, the illumination optical system includes a light dividing optical element that divides light emitted from the light source into a plurality of partial lights, and a superimposing optical system that superimposes the plurality of partial lights together on the first light modulator, the second light modulator and the third light modulator. The superimposing optical system includes a first superimposing lens that superimposes together a plurality of partial lights of the first color light of the plurality of partial lights on the first light modulator, a second superimposing lens that superimposes together a plurality of partial lights of the second color light of the plurality of partial lights on the second light modulator, and a third superimposing lens that superimposes together a plurality of partial lights of the third color light of the plurality of partial lights on the third light modulator. The second superimposing lens includes two or more lenses. The third superimposing lens includes two or more lenses. In this case, the images of the illumination optical system formed on the individual light modulators can be individually adjusted by providing the first, second and third superimposing lenses that are virtually standalone.

According to another aspect of the invention, the illumination optical system further includes an optical element for converging the plurality of partial lights divided by the light dividing optical element and that is disposed between the light dividing optical element and the superimposing optical system.

In order to achieve the above-described object, a second projector in accordance with the invention has the features of claim 10.

In short, in the second projector, when each of the first and second optical paths having lengths different from each other is replaced by a linear optical path, an inverted image of the light dividing optical element is formed at the position of each of the first and second light modulators, and the difference between the number of the reflection surfaces existing in the first optical path and the number of the reflection surfaces existing in the second optical path is an even number. This can prevent the images of the light dividing optical element each corresponding to each of the first and second color lights passing through the first and second optical paths from being inverted to each other when the images are formed on the first and second light modulators and the first and second color lights are combined by the cross dichroic prism. That is, even though the second optical path is longer than the first optical path, the image of the light dividing optical element corresponding to the first color light in the first optical path and the image of the light dividing optical element corresponding to the second color light in the second optical path are combined such that their up-down and left-right directions are the same as each other in the light emission side of the cross dichroic prism (more accurately, on the screen to which the images from the light modulators are superimposed together and projected).

According to another aspect of the invention, the light source includes two or more light emission sources. In this case, two or more light emission sources can provide more bright illumination light entering the light modulators. For example, two light emission sources disposed opposite in up-down and left-right symmetry around the system optical axis ideally allows the illumination optical system to provide illumination light having symmetric characteristics to the light modulators for the colors. On the other hand, when two or more light emission sources emits light to the illumination optical system, causing light having an illuminance distribution symmetric in the up-down and left-right directions around the system optical axis to enter the illumination optical system is difficult, and illumination light having an illuminance distribution showing partially spoiled symmetry tends to be formed, due to the individual difference or relative position error in the light emission sources, or how the combining system is configured. When light having an illuminance distribution non-symmetric in the up-down and left-right directions around the system optical axis enters the illumination optical system, the illuminance distribution in the image forming areas of the light modulators for the colors that are illuminated by the light shows partially spoiled symmetry. However, according to the configuration in accordance with the invention, the up-down and left-right directions of the images of illumination optical system each corresponding to each color light combined by the cross dichroic prism and projected on the screen are the same as one another, which reduces color unevenness in the projected image. For the same reason, even when the light emission conditions or the like of two or more light emission sources vary with time to cause a fluctuation in the light emission conditions or the like of the individual light emission sources, color unevenness in the projected image is difficult to occur.

### Brief Description of the Drawings

[Fig. 1] It shows a conceptual structure of an optical system of a projector in accordance with a first embodiment.
[Fig. 2] It shows how light travels in first and third optical paths shown in Fig. 1.
[Fig. 3] It shows how light travels in a second optical path shown in Fig. 1.
[Fig. 4] It shows an variation of the second optical path shown in Fig. 1.
[Fig. 5] It shows a conceptual structure of an optical system of a projector in accordance with a third embodiment.
[Fig. 6] It shows a conceptual structure of an optical system of a projector in accordance with a fourth embodiment.
[Fig. 7] It shows a conceptual structure of an optical system of a projector in accordance with a fifth embodiment.
[Fig. 8] It shows how light travels in a second optical path shown in Fig. 7.
[Fig. 9] It shows a conceptual structure of an optical system of a projector in accordance with a sixth embodiment.

### Best Mode for Carrying Out the Invention

### [First embodiment]

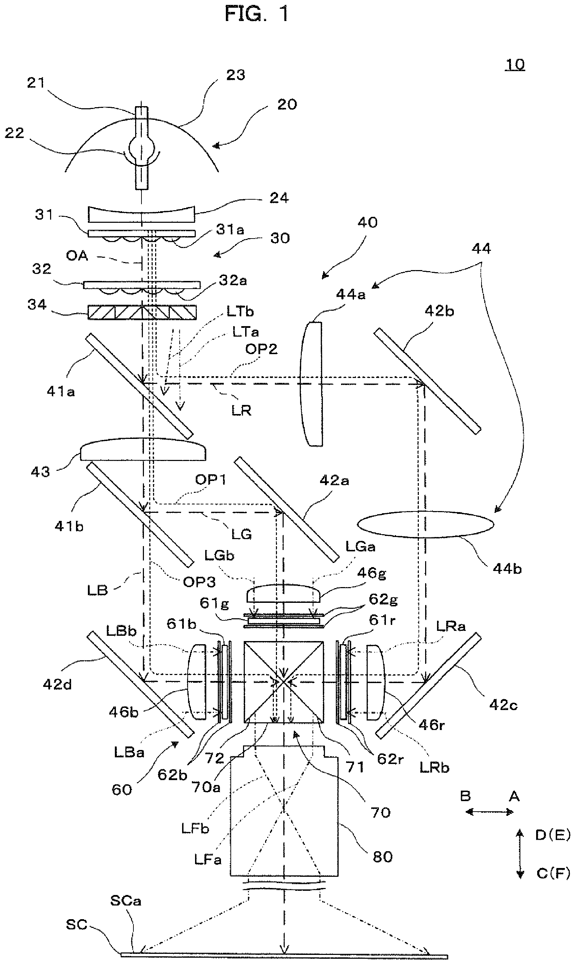

Fig. 1 shows a conceptual structure of an optical system of a projector in accordance with a first embodiment of the invention.

A projector 10 is an optical apparatus that forms a color optical image by modulating light emitted from a light source according to image information and enlarges and projects the optical images on a screen SC. The projector 10 includes a light source lamp unit 20 as a light source, an illumination optical system 30, a color separation and light guide optical system 40, a light modulator 60, a cross dichroic prism 70, and a projection optical system 80. The light source lamp unit 20 and the illumination optical system 30 form an lighting unit for generating illumination light to be supplied to the color separation and light guide optical system 40 and others. Note that first, second and third optical paths OP1, OP2 and OP3 along which green light LG, red light LR and blue light LB are guided, respectively, are provided between the illumination optical system 30 and the cross dichroic prism 70.

The light source lamp unit 20 is a light source unit that converges light emitted from a lamp main body 21 and emits the converged light through the illumination optical system 30 and others to illuminate the light modulator 60. The lamp main body 21 emits light including first, second and third color lights LG, LR and LB. The light source lamp unit 20 includes: the lamp main body 21 that is an arc tube; a spherical secondary mirror 22 for reflecting light forwardly emitted from the lamp main body 21; an ellipsoidal primary mirror 23 for reflecting light backwardly emitted from the lamp main body 21; and a concave lens 24 for collimation. In the light source lamp unit 20, light emitted from the lamp main body 21 enters the primary mirror 23 directly or via the secondary mirror 22, and is reflected in the forward direction and collimated by the concave lens 24 to be emitted toward the illumination optical system 30.

The illumination optical system 30 is an optical system that divides light emitted from the light source lamp unit 20 into a plurality of partial lights and polarizes the illumination light to a certain direction. The illumination optical system 30 includes a first multi-lens 31, a second multi-lens 32, a polarizer 34, and first and second superimposing lenses 43 and 44. Note that the first and second superimposing lenses 43 and 44 are a part of components of the illumination optical system 30 but are disposed in the color separation and light guide optical system 40. So, the arrangement and functionality of the first and second superimposing lenses 43 and 44 is described in detail when the color separation and light guide optical system 40 is described.

The first multi-lens 31, also referred to as a lens array, has the function as a light dividing optical element that divides light emitted from the lamp main body 21 into a plurality of partial lights and includes a plurality of lens elements 31a disposed in a matrix on a plane orthogonal to a system optical axis OA. The contour of each of the lens elements 31a is set to be almost similar to the shape of each image forming area of liquid crystal display panels 61g, 61r and 61b included in the light modulator 60 described later. The second multi-lens 32 is an optical element that converges the plurality of partial lights divided by the first multi-lens 31 described above. As with the first multi-lens 31, the second multi-lens 32 includes a plurality of lens elements 32a disposed in a matrix on a plane orthogonal to the system optical axis OA. However, since the second multi-lens 32 is provided for the purpose of light-converging, the contour of each of the lens elements 32a need not be precisely similar to the shape of each image forming area of the liquid crystal display panels 61g, 61r and 61b. Note that the first and second multi-lenses 31 and 32 described above and the first and second superimposing lenses 43 and 44 described later function as an optical integrator that provides generally uniform in-plane illuminance in each image forming area of the liquid crystal display panels 61g, 61r and 61b by dividing and superimposing the incident light.

The polarizer 34 includes a PBS array and a retardation film, and has the function of aligning the polarization directions of the partial lights divided by the first multi-lens 31 in one direction, that is, linear polarization. The PBS array of the polarizer 34, not shown in detail, is configured such that polarized light separating films and reflection mirrors tilted with respect to the system optical axis OA are alternately arranged at predetermined intervals in a direction perpendicular to the system optical axis OVA. The polarized light separating films transmit one of P-polarized light and S-polarized light included in each of the partial lights and reflect the other of them. The other polarized light thus reflected is bent by the reflection mirrors and emitted in the direction along which the one polarized light is emitted, that is, in the direction along the system optical axis OA. Either the P-polarized light or the S-polarized light thus emitted is polarized by the retardation film arranged in stripes on the light emission surface of the polarizer 34 such that the polarization directions of all the polarized lights are aligned in one direction. In this way, the polarizer 34 can align the polarization directions of lights emitted from the lamp main body 21 in one direction, improving the utilization of the light source light in the light modulator 60.

The color separation and light guide optical system 40 is an optical system that separates the plurality of partial lights having passed through the illumination optical system 30 into three primary color lights LG, LR and LB, and guides the lights LG, LR and LB to the liquid crystal display panels 61g, 61r and 61b, respectively. The color separation and light guide optical system 40 includes first and second dichroic mirrors 41a and 41b that are reflecting surfaces, a green light reflection mirror 42a, red light reflection mirrors 42b and 42c, and a blue light reflection mirror 42d. The color separation and light guide optical system 40 further includes first, second and third field lenses 46g, 46r and 46b. Note that the color separation and light guide optical system 40 guides the green light LG, red light LR and blue light BL of the illumination light from a common optical path to three individual optical paths each corresponding to each color light. These three optical paths are referred to as first, second and third optical paths OP1, OP2 and OP3. The three optical paths include a common optical path, and extend from the illumination optical system 30 (specifically, the first multi-lens 31) to the cross dichroic prism 70 described later (specifically, a light emission surface 70a).

The first and second dichroic mirrors 41a and 41b are branching mirrors that separate the illumination light into three primary color lights. The dichroic mirrors 41a and 41b are optical elements produced by forming on a transparent substrate a dielectric multilayer film having the wavelength selection function of reflecting light within a predetermined wavelength range and transmitting light outside the predetermined wavelength range. Both the dichroic mirrors 41a and 41b are tilted with respect to the system optical axis OA. The first dichroic mirror 41a reflects the red light LR of the three color lights of green, red and blue (G, R, B) and transmits the green light LG and blue light LB. The second dichroic mirror 41b reflects the green light LG of the incident green light LG and blue light LB and transmits the blue light LB. As a result, the illumination light traveling from the light source lamp unit 20 through the illumination optical system 30 to the color separation and light guide optical system 40 is separated into the red light LR reflected by the first dichroic mirror 41a and guided to the liquid crystal display panel 61r disposed upstream, the green light LG passing through the first dichroic mirror 41a, reflected by the second dichroic mirror 41b and guided to the liquid crystal display panel 61g disposed upstream, and the blue light LB passing through the first and second dichroic mirrors 41a and 41b and guided to the liquid crystal display panel 61b disposed upstream. Note that the length of the first optical path OP1 for the green light LG is equal to the length of the third optical path OP3 for the blue light LB. However, the second optical path OP2 for the red light LR is longer than the first optical path OP1 for the green light LG.

The first superimposing lens 43 is an optical element for converging the plurality of partial lights of the green light LG and blue light LB having passed through the first dichroic mirror 41a and superimposing the plurality of partial lights on the image forming areas of the liquid crystal display panels 61g and 61b for the green light LG and blue light LB described later, respectively. The first superimposing lens 43 is disposed at a position on the first optical path OP1 where the first optical path OP1 does not overlap with the second optical path OP2 and overlaps with the third optical path OP3. The first and third field lenses 46g and 46b are optical elements that make the incident plurality of partial lights be parallel with their respective chief rays. The green light LG and the blue light LB having passed through the first and second multi-lenses 31 and 32 and the first superimposing lens 43 travel through the first and third field lenses 46g and 46b, respectively, and superimposingly illuminate the light receiving area of the light modulator 60 described later, that is, the image forming areas of the liquid crystal display panels 61g and 61b with a generally uniform illuminance.

The second superimposing lens 44 includes a first lens 44a and a second lens 44b. The second lens 44b of the second superimposing lens 44 is responsible for most of the function of the superimposing lens. That is, the light-converging ability (lens power) of the second lens 44b is higher than that of the first lens 44a.

As with the first superimposing lens 43, the second superimposing lens 44 is an optical element for converging the plurality of partial lights of the red light LR having passed through the first dichroic mirror 41a and superimposing the plurality of partial lights on the image forming area of the liquid crystal display panel 61r for the red light LR described later. The second superimposing lens 44 is disposed at a position in the second optical path OP2 where the second optical path OP2 does not overlap with the first optical path OP1 and the third optical path OP3. The second field lens 46r is an optical element that makes the incident plurality of partial lights be parallel with their chief ray. The red light LR having passed through the first and second multi-lenses 31 and 32 and the second superimposing lens 44 travels through the second field lens 46r and superimposingly illuminates the light receiving area of the light modulator 60 described later, that is, the image forming area of the liquid crystal display panel 61r with a generally uniform illuminance.

The green light LG having passed through the first dichroic mirror 41a and the first superimposing lens 43 and having been reflected in the orthogonal direction by the second dichroic mirror 41b is again reflected in the orthogonal direction by the green light reflection mirror 42a to be guided toward the liquid crystal display panel 61g. The red light LR having been reflected in the orthogonal direction by the first dichroic mirror 41a and having passed through the first lens 44a and the second lens 44b is again reflected in the orthogonal direction by the red light reflection mirror 42b and again reflected in the orthogonal direction by the red light reflection mirror 42c to be guided toward the liquid crystal display panel 61r. The blue light LB having passed through the first dichroic mirror 41a, the first superimposing lens 43 and the second dichroic mirror 41b is reflected by the blue light reflection mirror 42d to be guided toward the liquid crystal display panel 61b. Note that the second and third optical paths OP2 and OP3 for the red light LR and the blue light LB as well as the first optical path OP1 for the green light LG extend parallel with the sheet surface of the figure. That is, system optical axes OA each corresponding to each color and each of the optical paths OP1, Op2 and OP3 are contained in the same plane and arranged two-dimensionally.

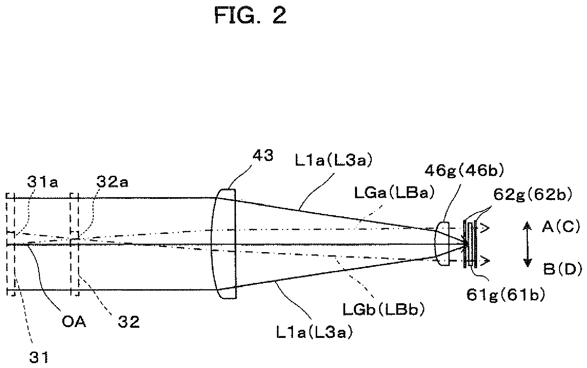

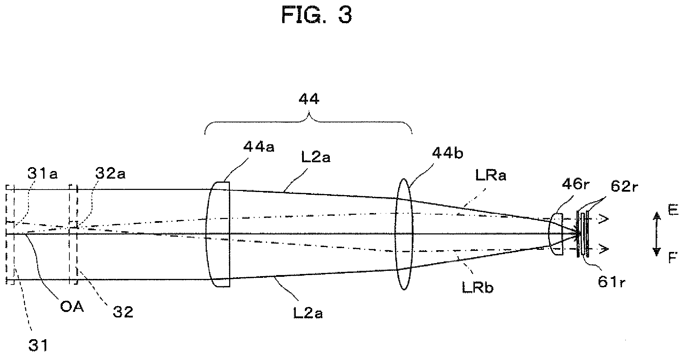

How light travels in the color separation and light guide optical system 40 is described below. Fig. 2 shows how light travels in the first and third optical paths OP1 and OP3. Fig. 3 shows how light travels in the second optical path OP2. Note that Figs. 2 and 3 are simplified for purposes of illustration, in which the optical paths OP1, OP2 and OP3 are replaced by linear optical paths, and the reflections by the dichroic mirrors 41a, 41b and the reflection mirrors 42a, 42b, 42c, 42d are omitted. In other words, Figs. 2 and 3 show how light travels in a virtual condition that the optical paths OP1, OP2 and OP3 are replaced by linear optical paths including no reflecting surface. Solid lines in Figs. 2 and 3 show how parallel lights entering the superimposing lenses 43, 44 travel. Alternate long and two short dashes lines in Fig. 2 and 3 show how lights travel that are emitted from the B, D and F sides of a lens element 31a that is part of the first multi-lens 31 and enter the A, C and E sides of the liquid crystal display panels 61g, 61b and 61r from the position of the second multi-lens 32. Alternate long and short dash lines in Fig. 2 and 3 show how lights travel that are emitted from the A, C and E sides of the lens element 31a of the first multi-lens 31 and enter the B, D and F sides of the liquid crystal display panels 61g, 61b and 61r from the position of the second multi-lens 32.

In the first optical path OP1, the first superimposing lens 43 and the first field lens 46g are disposed. Parallel light L1a having entered the first superimposing lens 43 in the first optical path OP1 passes through the first field lens 46g to be superimposed on the image forming area of the liquid crystal display panel 61g. In the second optical path OP2, the first lens 44a, the second lens 44b and the second field lens 46r are disposed. Parallel light L2a having entered the second superimposing lens 44 including the pair of the lenses 44a and 44b in the second optical path OP2 passes through the second field lens 46r to be superimposed on the image forming area of the liquid crystal display panel 61r. In the third optical path OP3, the first superimposing lens 43 and the third field lens 46b are disposed. Parallel light L3a having entered the first superimposing lens 43 in the third optical path OP3 passes through the third field lens 46b to be superimposed on the image forming area of the liquid crystal display panel 61b.

In Fig. 1, lights LTa, LTb that are parts of the same partial light emitted from the illumination optical system 30 are separated into individual color lights by being transmitted or reflected by the first and second dichroic mirrors 41a and 41b. Specifically, the light LTa is separated into green light LGa, red light LRa and blue light LBa. The light LTb is separated into green light LGb, red light LRb and blue light LBb.

As shown in Fig. 2, in the first and third optical paths OP1 and OP3, the green light LGa and the blue light LBa emitted from the B and D sides of the lens element 31a and passing through a lens element 32a and the first superimposing lens 43 enter the A and C sides of the liquid crystal display panels 61g and 61b in the optical paths OP1, OP3, respectively. On the other hand, the green light LGb and the blue light LBb emitted from the A and C sides of the lens element 31a and passing through the B and D sides of the lens element 32a and the first superimposing lens 43 enter the B and D sides of the liquid crystal display panels 61g and 61b in the optical paths OP1, OP3, respectively. That is, assuming that the lights LGa, LBa, LGb, LBb are not reflected by the dichroic mirrors 41a, 41b and the reflection mirrors 42a, 42d in the first and third optical paths OP1 and OP3, the image of the lens element 31a is not formed on the way from the lens element 31a to the liquid crystal display panels 61g and 61b, and an inverted image of the lens element 31a that is part of the first multi-lens 31 (inverted image of the illumination optical system 30) is formed at the positions of the liquid crystal display panels 61g and 61b. Actually, as shown in Fig. 1, in the first optical path OP1 extending from the light entrance surface of the first multi-lens 31 of the illumination optical system 30 through the liquid crystal display panel 61g to the light emission surface of the cross dichroic prism 70, a plurality of divided lights emitted from the first multi-lens 31 are reflected twice by the second dichroic mirror 31b and the green light reflection mirror 42a, and form an inverted image (an image inverted in the up-down and left-right directions) at the position of the liquid crystal display panel 61g. On the other hand, in the third optical path OP3 extending from the light entrance surface of the first multi-lens 31 of the illumination optical system 30 through the liquid crystal display panel 61b to the light emission surface of the cross dichroic prism 70, a plurality of divided lights emitted from the first multi-lens 31 are reflected once by the blue light reflection mirror 42d, and form an image inverted in the up-down direction on the liquid crystal display panel 61b as viewed along the third optical path OP3.

Similarly, as shown in Fig. 3, in the second optical path OP2, the red light LRa emitted from the F side of the lens element 31a and passing through the lens element 32a, the first lens 44a, and the second lens 44b enters the E side of the liquid crystal display panel 61r. The red light LRb is emitted from the E side of the lens element 31a, passes through the lens element 32a and the first and second lenses 44a and 44b, and enters the F side of the liquid crystal display panel 61r. That is, assuming that, in the second optical path OP2, the lights LRa and LRb are not reflected by the first dichroic mirrors 41a and the reflection mirrors 42b and 42c, the image of the lens element 31a is not formed on the way from the lens element 31a to the liquid crystal display panel 61r, and an inverted image of the lens element 31a that is part of the first multi-lens 31 (inverted image of the illumination optical system 30) is formed at the positions of the liquid crystal display panel 61r. Actually, as shown in Fig. 1, in the second optical path OP2 extending from the light entrance surface of the first multi-lens 31 of the illumination optical system 30 through the liquid crystal display panel 61r to the light emission surface of the cross dichroic prism 70, a plurality of divided lights emitted from the first multi-lens 31 are reflected three times by the first dichroic mirror 31a and the red light reflection mirrors 42b, 42c, and form an image inverted in the up-down direction on the liquid crystal display panel 61r as viewed along the third optical path OP3.

Returning to Fig. 1, the light modulator 60 includes the three liquid crystal display panels 61g, 61r and 61b to which the three color illumination lights LG, LR and LB are supplied, respectively. The liquid crystal display panel 61g for the green light LG and a pair of polarization filters 62g and 62g interposing the liquid crystal display panel 61g constitute a liquid crystal light valve for green light that two-dimensionally modulates the luminance of the illumination light based on the image information. Also, the liquid crystal display panel 61r for the red light LR sandwiched by a pair of polarization filters 62r and 62r operates as a liquid crystal light valve for red light. Similarly, the liquid crystal display panel 61b for the blue light LB sandwiched by a pair of polarization filters 62b and 62b operates as a liquid crystal light valve for blue light. Each of the liquid crystal display panels 61g, 61r and 61b is produced by sealing liquid crystals as electro-optical substances between a pair of transparent glass substrates, and modulates the polarization direction of incident polarized light according to a given image signal using, for example, polysilicon TFTs as switching elements.

The green light LG guided to the first optical path OP1 enters the light receiving area of the liquid crystal display panel 61g through the first superimposing lens 43, the green light reflection mirror 42a and the first field lens 46g to illuminate the image forming area of the liquid crystal display panel 61g. The red light LR guided to the second optical path OP2 enters the light receiving area of the liquid crystal display panel 61r through the first lens 44a, the red light reflection mirror 42b, the second lens 44b, the red light reflection mirror 42c and the second field lens 46r to illuminate the image forming area of the liquid crystal display panel 61r. The blue light LB guided to the third optical path OP3 enters the light receiving area of the liquid crystal display panel 61b through the first superimposing lens 43, the second dichroic mirror 41b, the blue light reflection mirror 42d and the third field lens 46b to illuminate the image forming area of the liquid crystal display panel 61b.

The liquid crystal display panels 61g, 61r and 61b that are first, second and third light modulators of non-emission and transmission type cause the spatial distribution of the polarization direction of each incident illumination light to vary. The illumination lights LG, LR and LB entering the liquid crystal display panels 61g, 61r and 61b, respectively, have their respective polarizations adjusted pixel by pixel according to drive signals or control signals inputted as electric signals to the liquid crystal display panels 61g, 61r and 61b. At this time, the polarization filters 62g, 62r and 62b adjust the polarization of the illumination light entering the liquid crystal display panels 61g, 61r and 61b, and extract the modulated lights having a predetermined polarization direction from lights emitted from the liquid crystal display panels 61g, 61r and 61b.

The cross dichroic prism 70 that is a light combining optical system combines optical images modulated for each of the color lights LG, LR and LB and emitted from the polarization filters 62g, 62r and 62b to form a color image. The cross dichroic prism 70 is generally square-shaped as viewed from above with four right-angle prisms bonded together. A pair of dielectric multilayer films 71 and 72 crossing in an X-shape are formed in the interface at which the right-angle prisms are bonded. The first dielectric multilayer film 71 reflects the blue light LB, and the second dielectric multilayer film 72 reflects the red light LR. The cross dichroic prism 70 reflects the blue light LB from the liquid crystal display panel 61b by the first dielectric multilayer film 71 to cause the blue light LB to travel to the right with respect to the traveling direction, reflects the red light LR from the liquid crystal display panel 61r by the second dielectric multilayer film 72 to cause the red light LR to travel to the left with respect to the traveling direction, and directs the green light LG from the liquid crystal display panel 61g to travel straight toward the outside through the first and second dielectric multilayer films 71 and 72. That is, the red light LR and the blue light LB are guided to the cross dichroic prism 70 in such directions that they will be bent within the cross dichroic prism 70, and the green light LG is guided to the cross dichroic prism 70 in such directions that it will go straight within the cross dichroic prism 70. Thus, when the color lights LG, LR and LB having passed through the liquid crystal display panels 61g, 61r and 61b enter a plurality of light entrance surfaces serving as a plurality of light receiving portions of the cross dichroic prism 70, the cross dichroic prism 70 combines the color lights LG, LR and LB by transmitting or reflecting them using the two dielectric multilayer films having different characteristics, and emits the combined light from the light emission surface 70a serving as the light emission portion.

Considering image inversion, as shown in Fig. 1, the plurality of divided lights emitted from the plurality of lens elements 31a included in the first multi-lens 31 in the first optical path OP1 are reflected twice between the light entrance surface of the first multi-lens 31 of the illumination optical system 30 and the light emission surface of the cross dichroic prism 70. The plurality of divided lights emitted from the plurality of lens elements 31a included in the first multi-lens 31 in the second optical path OP2 are reflected four times between the light entrance surface of the first multi-lens 31 of the illumination optical system 30 and the light emission surface of the cross dichroic prism 70. The plurality of divided lights emitted from the plurality of lens elements 31a included in the first multi-lens 31 in the third optical path OP3 are reflected twice between the light entrance surface of the first multi-lens 31 of the illumination optical system 30 and the light emission surface of the cross dichroic prism 70. The image of the lens element 31a of the first multi-lens 31 corresponding to the green light LG, projected by the projection optical system 80 that forms inverted images of the liquid crystal display panels 61g, 61r and 61b, is an erect image. Also, the image of the lens element 31a of the first multi-lens 31 corresponding to the red light LR, similarly projected by the projection optical system 80, is an erect image. Also, the image of the lens element 31a of the first multi-lens 31 corresponding to the blue light LB, similarly projected by the projection optical system 80, is an erect image. As a result, the image projected by the projection optical system 80 is an image produced by superimposing together all the images of the lens element 31a of the first multi-lens 31 each corresponding to each of the illumination lights LG, LR and LB, which are not inverted with respect to one another.

The image light combined by the cross dichroic prism 70 in this way passes through the projection optical system 80 as an enlarging and projecting lens to be projected at an appropriate magnification onto the screen SC as a color image. Note that the projection optical system 80 is an optical system that projects inverted images of the liquid crystal display panel 61g and others. Accordingly, the image of the illumination optical system 30 projected onto a screen surface SCa of the screen SC will be an erect image including no relative inversion as described above. Specifically, the image of each lens element 31a of the first multi-lens 31 corresponding to each of the green light LG, the red light LR and the blue light LB projected onto the screen surface SCa will be an erect image.

In this configuration including the first and second multi-lenses 31, 32 and the first and second superimposing lenses 43, 44, when light having an illuminance distribution symmetric in the up-down and left-right directions around the system optical axis OA enters the first multi-lens 31, the image forming areas of the liquid crystal display panels 61g, 61r and 61b can be illuminated with light having an extremely uniform in-plane illuminance. However, when light having an illuminance distribution non-symmetric in the up-down and left-right directions around the system optical axis OA enters the first multi-lens 31, the image forming areas of the liquid crystal display panels 61g, 61r and 61b may be illuminated with light having a slightly non-uniform in-plane illuminance. Due to individual difference or relative position error between the parts included in the light source lamp unit 20, the illuminance distribution of light entering the first multi-lens 31 may be non-symmetric in the up-down and left-right directions around the system optical axis OA. When the image forming areas of the liquid crystal display panels 61g, 61r and 61b are illuminated with light having an generally uniform in-plane illuminance, and the images of the lens element 31a of the first multi-lens 31 each corresponding to each of the color lights LG, LR and LB projected by the projection optical system 80 are aligned in the up-down and left-right directions, displaying an entirely white image, for example, does not make an observer feel a slight illuminance difference because illuminances of the illumination lights LG, LR and LB do not differ from one another in any portion within the projected image. On the other hand, when the image forming areas of the liquid crystal display panels 61g, 61r and 61b are illuminated with light having an in-plane illuminance slightly non-uniform in terms of symmetry, and the images of the lens element 31a of the first multi-lens 31 each corresponding to each of the color lights LG, LR and LB projected by the projection optical system 80 are not aligned in the up-down and left-right directions, displaying an entirely white image, for example, makes the observer feel color unevenness in the portion where illuminances of the illumination lights LG, LR and LB differ from one another within the projected image.

In the projector 10 described above, in the second optical path OP2 longer than the first optical path OP1, the image of the lens element 31a of the first multi-lens 31 is formed on the liquid crystal display panel 61r without being formed on the way to the liquid crystal display panel 61r. As with the second optical path OP2, in the first optical path OP1, the image of the lens element 31a of the first multi-lens 31 is formed on the liquid crystal display panel 61g without being formed on the way to the liquid crystal display panel 61g. Also, the difference between the number of the reflection surfaces existing in the first optical path OP1 and the number of the reflection surfaces existing in the second optical path OP2 is an even number. Note that zero is an even number. Accordingly, even though the length of the first optical path OP1 is different from that of the second optical path OP2, the up-down and left-right directions of the images of the lens element 31a each corresponding to each color having passed through the respective optical paths and having been projected by the projection optical system 80 are the same as each other. Also, since the length of the first optical path OP1 is equal to that of the third optical path OP3, and the difference between the number of the reflection surfaces existing in the first optical path OP1 and the number of the reflection surfaces existing in the third optical path OP3 is an even number, the up-down and left-right directions of the images of the lens element 31a of the illumination optical system 30 each corresponding to each of the green light LG and the blue light LB having passed through the first and third optical paths OP1 and OP3, respectively, and having been projected onto the screen surface SCa of the screen SC by the projection optical system 80 are the same as each other. Specifically, a first light LFa emitted from one end of the light emission surface 70a of the cross dichroic prism 70, passing through the projection optical system 80, and entering the right side of the screen surface SCa corresponds to the combination of the green light LGa, red light LRa and blue light LBa branching from a certain light included in the same partial light having passed the first multi-lens 31 of the illumination optical system 30. Also, a light LFb emitted from one end of the light emission surface 70a of the cross dichroic prism 70, passing through the projection optical system 80, and entering the left side of the screen surface SCa corresponds to the combination of the green light LGb, red light LRb and blue light LBb branching from another light included in the same partial light having passed the first multi-lens 31 of the illumination optical system 30. In this way, the up-down and left-right directions of the projected images each corresponding to each of the lights LG, LR and LB can be the same as one another by previously controlling the relative image forming conditions of the first, second and third optical paths OP1, OP2 and OP3 having lengths different from one another. This can reduce deterioration of white balance and color unevenness in the projection lights from the projector 10 even when the light emission distribution of the light source varies with time, for example.

### [Second embodiment]

A projector in accordance with a second embodiment of the invention is described below. The projector in accordance with the second embodiment is a partially modified version of the projector in accordance with the first embodiment, so similar components are not specifically described here.

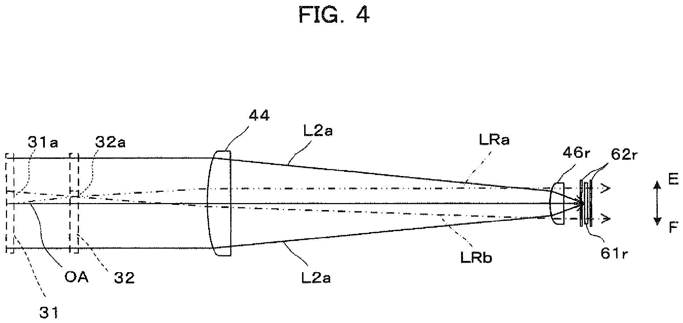

Fig. 4 corresponds to Fig. 3, showing how light travels in the second optical path OP2 of the projector 10 in accordance with the second embodiment. In the second optical path OP2 of the projector 10 in this embodiment, the single second superimposing lens 44 is disposed. Note that, in Fig. 4, the second optical path OP2 is replaced by a linear optical path, and the reflections by the second dichroic mirror 41b and the reflection mirrors 42b and 42c are omitted. In other words, Fig. 4 shows how light travels in a virtual condition that the second optical path OP2 is replaced by a linear optical path including no reflecting surface.

In the second optical path OP2 in this embodiment, the red light LRa emitted from the F side of the lens element 31a and passing through the lens element 32a and the second superimposing lens 44 enters the E side of the liquid crystal display panel 61r. The red light LRb is emitted from the E side of the lens element 31a, passes through the lens element 32a and the second superimposing lens 44, and enters the F side of the liquid crystal display panel 61r. That is, assuming that, in the second optical path OP2, the lights LRa and LRb are not reflected by the first dichroic mirrors 41a and the reflection mirrors 42b and 42c, the image of the lens element 31a is not formed on the way from the lens element 31a to the liquid crystal display panel 61r, and an inverted image of the lens element 31a that is part of the first multi-lens 31 is formed on the liquid crystal display panel 61r.

In the projector 10 described above, in the second optical path OP2 longer than the first optical path OP1, the image of the lens element 31a of the first multi-lens 31 is formed on the liquid crystal display panel 61r without being formed on the way to the liquid crystal display panel 61r while reducing the number of lenses disposed in the second optical path OP2 by providing the single second superimposing lens 44 in the second optical path OP2 longer than the first optical path OP1. As with the first embodiment, this can reduce deterioration of white balance and color unevenness in the projection lights from the projector 10.

### [Third embodiment]

A projector in accordance with a third embodiment of the invention is described below. The projector in accordance with the third embodiment is a partially modified version of the projector 10 in accordance with the first embodiment, so similar components are not specifically described here.

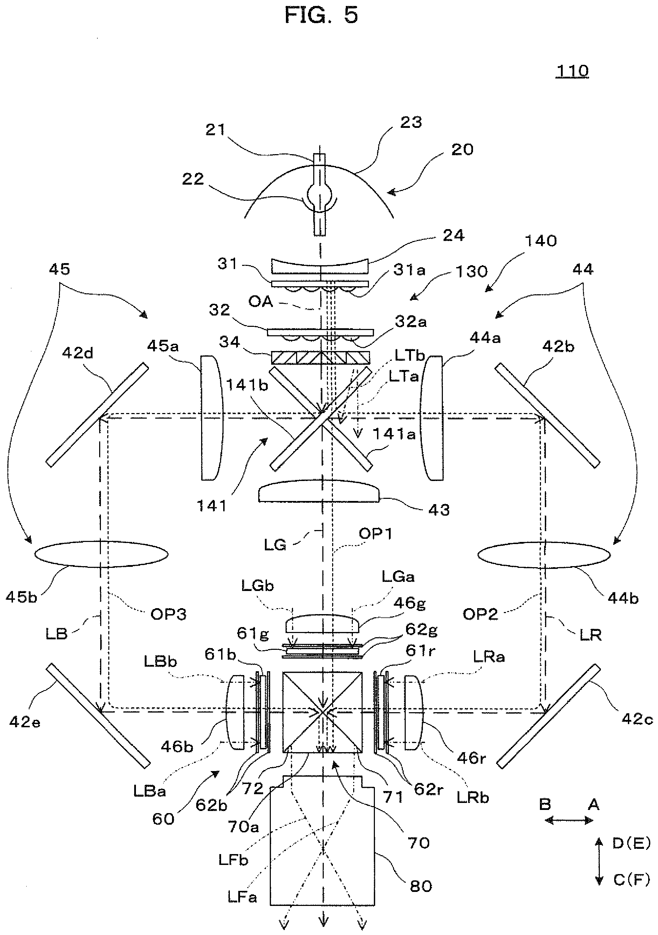

Fig. 5 shows a conceptual structure of an optical system of a projector 110 in accordance with the third embodiment. The projector 110 in this embodiment includes the light source lamp unit 20, an illumination optical system 130, a color separation and light guide optical system 140, the light modulator 60, the cross dichroic prism 70, and the projection optical system 80.

The illumination optical system 130 is an optical system that divides light emitted from the light source lamp unit 20 into a plurality of partial lights and polarizes the illumination light to a certain direction. The illumination optical system 130 includes the first multi-lens 31, the second multi-lens 32, the polarizer 34, the first and second superimposing lenses 43 and 44, and a third superimposing lens 45. Note that the first, second and third superimposing lenses 43, 44 and 45 are a part of components of the illumination optical system 130 but are disposed in the color separation and light guide optical system 140. So, the arrangement and functionality of the first, second and third superimposing lenses 43, 44 and 45 is described in detail when the color separation and light guide optical system 140 is described.

The color separation and light guide optical system 140 includes a cross dichroic mirror 141, the red light reflection mirrors 42b and 42c, the blue light reflection mirror 42d, a blue light reflection mirror 42e, and the first, second and third field lenses 46g, 46r and 46b.

The cross dichroic mirror 141 separates illumination light into three primary color lights. The cross dichroic mirror 141 includes a pair of dichroic mirrors 141a and 141b crossing in an X-shape. The first dichroic mirror 141a reflects the red light LR, and the second dichroic mirror 141b reflects the blue light LB. Also, the first and second dichroic mirrors 141a and 141b transmit the green light LG. As a result, light having passed through the cross dichroic mirror 141 is separated into the red light LR reflected by the first dichroic mirror 141a and guided to the second optical path OP2 extending downstream, the blue light LB reflected by the second dichroic mirror 141b and guided to the third optical path OP3 extending downstream, and the green light LG passing through the first and second dichroic mirrors 141a and 141b and guided to the first optical path OP1 extending downstream.

The first superimposing lens 43 is an optical element for converging the plurality of partial lights of the green light LG having passed through the cross dichroic mirror 141 and superimposing the plurality of partial lights on the image forming area of the liquid crystal display panel 61g. The first field lens 46g is an optical element that makes the incident plurality of partial lights be parallel with their chief ray. The green light LG having passed through the first and second multi-lenses 31 and 32 and the first superimposing lens 43 travels through the first field lens 46g and superimposingly illuminates the light receiving area of the light modulator 60, that is, the image forming area of the liquid crystal display panel 61g with a generally uniform illuminance.

The second superimposing lens 44 includes a first lens 44a and a second lens 44b. The second lens 44b of the second superimposing lens 44 is responsible for most of the function of the superimposing lens.

As with the first superimposing lens 43, the second superimposing lens 44 is an optical element for converging the plurality of partial lights of the red light LR having passed through the cross dichroic mirror 141a and superimposing the converged plurality of partial lights on the image forming area of the liquid crystal display panel 61r. The second field lens 46r is an optical element that make the incident plurality of partial lights be parallel with their chief ray. The red light LR having passed through the first and second multi-lenses 31 and 32 and the second superimposing lens 44 travels through the second field lens 46r and superimposingly illuminates the light receiving area of the light modulator 60, that is, the image forming area of the liquid crystal display panel 61r with a generally uniform illuminance.

As with the second superimposing lens 44, the third superimposing lens 45 includes a third lens 45a and a fourth lens 45b. The fourth lens 45b of the third superimposing lens 45 is responsible for most of the function of the superimposing lens.

As with the first and second superimposing lenses 43 and 44, the third superimposing lens 45 is an optical element for converging the plurality of partial lights of the blue light LB having passed through the cross dichroic mirror 141 and superimposing the plurality of partial lights on the image forming area of the liquid crystal display panel 61b. The third field lens 46b is an optical element that makes the incident plurality of partial lights be parallel with their chief ray. The blue light LB having passed through the first and second multi-lenses 31 and 32 and the third superimposing lens 45 travels through the third field lens 46b and superimposingly illuminates the light receiving area of the light modulator 60, that is, the image forming area of the liquid crystal display panel 61b with a generally uniform illuminance.

The red light LR having been reflected in the orthogonal direction by the first dichroic mirror 141a and having passed through the first lens 44a and the second lens 44b is again reflected in the orthogonal direction by the red light reflection mirror 42b and again reflected in the orthogonal direction by the red light reflection mirror 42c to be guided toward the liquid crystal display panel 61r. The blue light LB having been reflected in the orthogonal direction by the second dichroic mirror 141b and having passed through the third lens 45a and the fourth lens 45b is again reflected in the orthogonal direction by the blue light reflection mirror 42d and again reflected in the orthogonal direction by the blue light reflection mirror 42e to be guided toward the liquid crystal display panel 61b.

In the light modulator 60, the green light LG guided to the first optical path OP1 enters the light receiving area of the liquid crystal display panel 61g through the above-described first superimposing lens 43 and the first field lens 46g to illuminate the image forming area of the liquid crystal display panel 61g. The red light LR guided to the second optical path OP2 enters the light receiving area of the liquid crystal display panel 61r through the above-described first lens 44a, the red light reflection mirror 42b, the second lens 44b, the red light reflection mirror 42c and the second field lens 46r to illuminate the image forming area of the liquid crystal display panel 61r. The blue light LB guided to the third optical path OP3 enters the light receiving area of the liquid crystal display panel 61b through the above-described third lens 45a, the blue light reflection mirror 42d, the fourth lens 45b, the blue light reflection mirror 42e and the third field lens 46b to illuminate the image forming area of the liquid crystal display panel 61b.

In the above-described projector 110, in the first optical path OP1, the image of the lens element 31a of the first multi-lens 31 is formed on the liquid crystal display panel 61g without being formed on the way to the liquid crystal display panel 61g. Also, in the second and third optical paths OP2 and OP3 that are longer than the first optical path OP1, the image of the lens element 31a of the first multi-lens 31 is formed on the liquid crystal display panels 61r and 61b without being formed on the way to the liquid crystal display panels 61r and 61b, respectively, as with the first optical path OP1. Moreover, the difference between the number of the reflection surfaces existing in the first optical path OP1 and the number of the reflection surfaces existing in the second optical path OP2 is an even number, and the difference between the number of the reflection surfaces existing in the first optical path OP1 and the number of the reflection surfaces existing in the third optical path OP3 is an even number. Note that zero is an even number. Accordingly, even though the length of the first optical path OP1 is different from that of the second and third optical paths OP2 and OP3, the up-down and left-right directions of the images of the lens element 31a each corresponding to each color having passed through the respective optical paths and having been projected by the projection optical system 80 are the same as each other. Note that, since the length of the second optical path OP1 is equal to that of the third optical path OP3, and the difference between the number of the reflection surfaces existing in the second optical path OP2 and the number of the reflection surfaces existing in the third optical path OP3 is an even number, the up-down and left-right directions of the images of the lens element 31a of the illumination optical system 130 each corresponding to each of the red light LR and the blue light LB having passed through the second and third optical paths OP2 and OP3, respectively, and having been projected by the projection optical system 80 are the same as each other with reference to the light emission side of the cross dichroic mirror 141. In this way, the up-down and left-right directions of the projected images each corresponding to each of the lights LG, LR and LB can be the same as one another by previously controlling the relative image forming conditions of the first optical path OP1 and the second and third optical paths OP2 and OP3 having lengths different from the length of the optical path OP1. This can reduce deterioration of white balance and color unevenness in the projection lights from the projector 110 even when the light emission distribution of the light source varies with time, for example.

### [Fourth embodiment]

A projector in accordance with a fourth embodiment of the invention is described below. The projector in accordance with the fourth embodiment is a partially modified version of the projector 10 in accordance with the first embodiment, so similar components are not specifically described here.

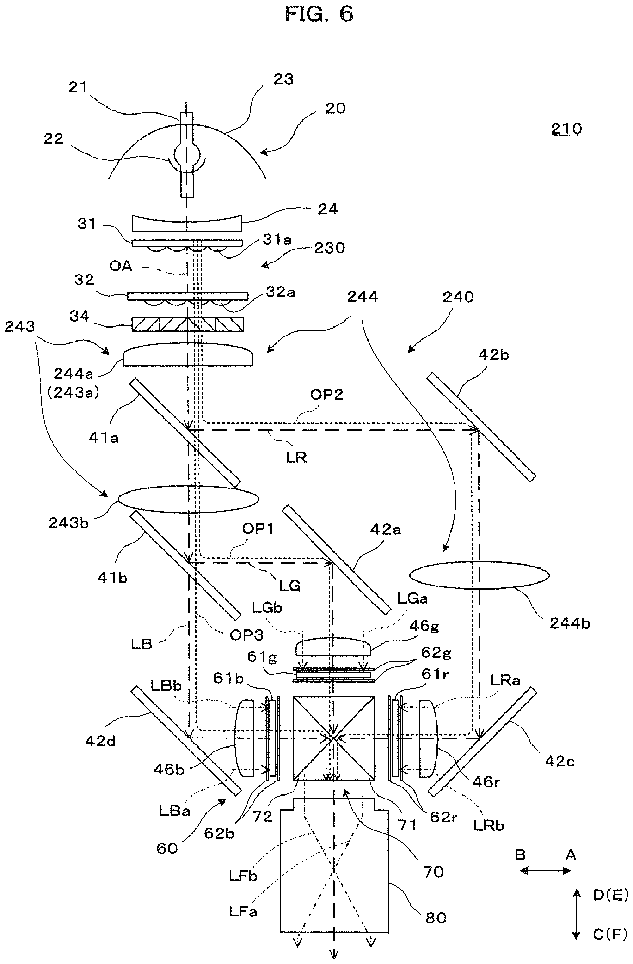

Fig. 6 shows a conceptual structure of an optical system of a projector 210 in accordance with the fourth embodiment. The projector 210 in this embodiment includes the light source lamp unit 20, an illumination optical system 230, a color separation and light guide optical system 240, the light modulator 60, the cross dichroic prism 70, and the projection optical system 80.

The illumination optical system 230 is an optical system that divides light emitted from the light source lamp unit 20 into a plurality of partial lights and polarizes the illumination light to a certain direction. The illumination optical system 230 includes the first multi-lens 31, the second multi-lens 32, the polarizer 34, and first and second superimposing lenses 243 and 244.

The color separation and light guide optical system 240 includes the first and second dichroic mirrors 41a and 41b, the green light reflection mirror 42a, the red light reflection mirrors 42b and 42c, the blue light reflection mirror 42d, and the first, second and third field lenses 46g, 46r and 46b.

The first superimposing lens 243 includes a third lens 243a and a fourth lens 243b. The first superimposing lens 243 is provided for the first and third optical paths OP1 and OP3, but the third lens 243a is provided to be common to the first, second and third optical paths OP1, OP2 and OP3.

The second superimposing lens 244 includes a first lens 244a and a second lens 244b. The second superimposing lens 244 is provided for the second optical path OP2, but the first lens 244a is also the lens used as the third lens 243a of the first superimposing lens 243, as described above. That is, the third lens 243a, one of the lenses included in the first superimposing lens 243, is also included in the second superimposing lens 244.

In the above-described projector 210, in the first and third optical paths OP1 and OP3, the image of the lens element 31a of the first multi-lens 31 is formed on the liquid crystal display panels 61g and 61b without being formed on the way to the liquid crystal display panels 61g and 61b. Also, in the second optical path OP2 longer than the first optical path OP1 and others, the image of the lens element 31a of the first multi-lens 31 is formed on the liquid crystal display panel 61r without being formed on the way to the liquid crystal display panel 61r, as with the first optical path OP1. Also, the difference between the number of the reflection surfaces existing in the first optical path OP1 and the number of the reflection surfaces existing in the second optical path OP2 is an even number. Note that zero is an even number. Accordingly, even though the length of the first optical path OP1 is different from that of the second optical path OP2, the up-down and left-right directions of the images of the lens element 31a each corresponding to each color having passed through the respective optical paths and having been projected by the projection optical system 80 are the same as each other. Also, since the length of the first optical path OP1 is equal to that of the third optical path OP3, and the difference between the number of the reflection surfaces existing in the first optical path OP1 and the number of the reflection surfaces existing in the third optical path OP3 is an even number, the up-down and left-right directions of the images of the lens element 31a of the illumination optical system 230 each corresponding to each of the green light LG and the blue light LB having passed through the first and third optical paths OP1 and OP3, respectively, and having been projected by the projection optical system 80 are the same as each other with reference to the light emission side of the cross dichroic mirror 141. In this way, the up-down and left-right directions of the projected images each corresponding to each of the lights LG, LR and LB can be the same as one another by previously controlling the relative image forming conditions of the first and second optical paths OP1 and OP2 having lengths different from each other. This can reduce deterioration of white balance and color unevenness in the projection lights from the projector 210 even when the light emission distribution of the light source varies with time, for example. Also, providing the first lens 244a that is also the third lens 243a common to the optical paths OP1, OP2 and OP3 simplifies the configuration of the optical paths OP1, OP2 and OP3.

### [Fifth embodiment]

A projector in accordance with a fifth embodiment of the invention is described below. The projector in accordance with the fifth embodiment is a partially modified version of the projector 10 in accordance with the first embodiment, so similar components are not specifically described here.

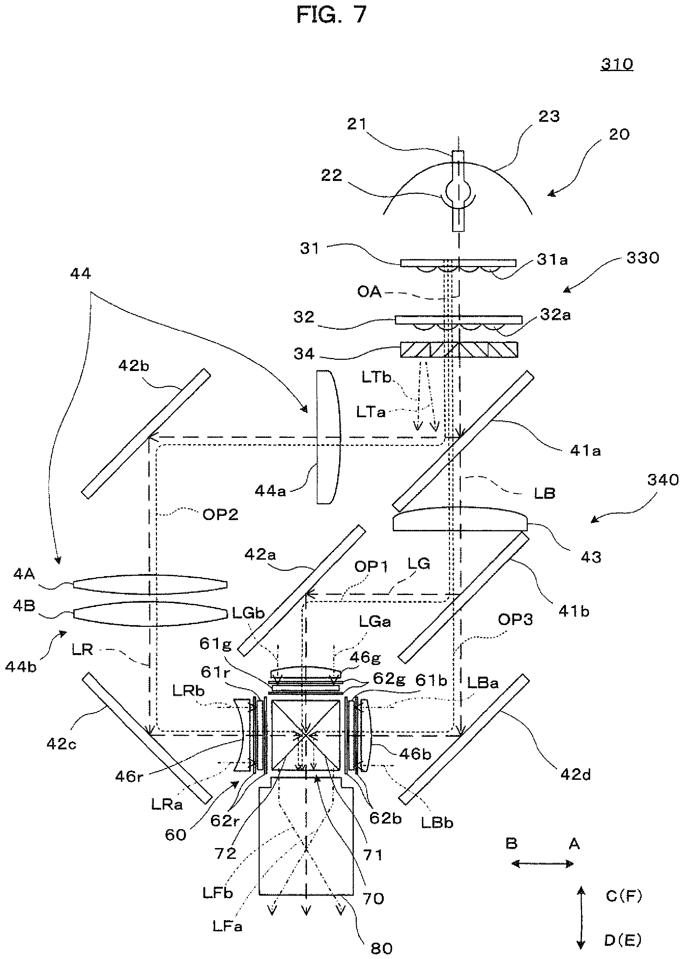

Fig. 7 shows a conceptual structure of an optical system of a projector 310 in accordance with the fifth embodiment. The projector 310 in this embodiment includes the light source lamp unit 20, an illumination optical system 330, a color separation and light guide optical system 340, the light modulator 60, the cross dichroic prism 70, and the projection optical system 80.

The illumination optical system 330 is an optical system that divides light emitted from the light source lamp unit 20 into a plurality of partial lights and polarizes the illumination light to a certain direction. The illumination optical system 330 includes the first multi-lens 31, the second multi-lens 32, the polarizer 34, and first and second superimposing lenses 43 and 44.

The color separation and light guide optical system 340 includes the first and second dichroic mirrors 41a and 41b, the green light reflection mirror 42a, the red light reflection mirrors 42b and 42c, the blue light reflection mirror 42d, and the first, second and third field lenses 46g, 46r and 46b.

As with the first embodiment, the second superimposing lens 44 includes a first lens 44a and a second lens 44b. The second lens 44b includes a former lens 4A and a latter lens 4B, and the pair of the former lens 4A and the latter lens 4B have the function corresponding to that of the second lens 44b, a single lens, in the first embodiment. The second lens 44b including the two lenses 4A and 4B is responsible for most of the function of the superimposing lens.

In the color separation and light guide optical system 340, the second field lens 46r is a concave lens and the power of which is controlled according to the power and position of the second superimposing lens 44 such that the incident plurality of partial lights enter the liquid crystal display panel 61r in parallel with their chief ray.

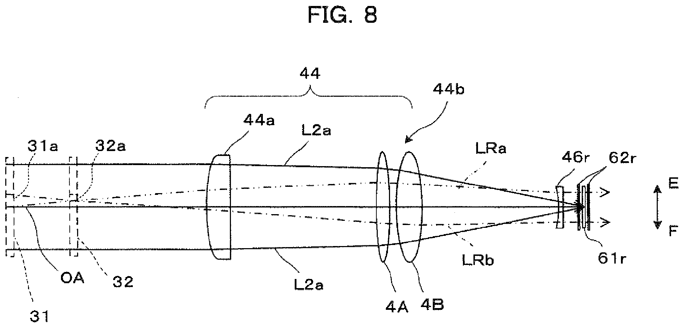

How light travels in the fifth embodiment is described below. Fig. 8 shows how light travels when the second optical path OP2 is replaced by a linear optical path and the reflections by the first dichroic mirror 41a and the red light reflection mirrors 42b and 42c are omitted. In other words, Fig. 8 shows how light travels in a virtual condition that the second optical path OP2 is replaced by a linear optical path including no reflecting surface. In Fig. 8, solid lines show how parallel lights entering the second superimposing lens 44 travel. Alternate long and two short dashes lines show how lights travel that are emitted from the F side of the lens element 31a of the first multi-lens 31 and enter the E sides of the liquid crystal display panel 61r from the position of the second multi-lens 32. Alternate long and short dash lines show how lights travel that are emitted from the E side of the lens element 31a of the first multi-lens 31 and enter the F sides of the liquid crystal display panel 61r from the position of the second multi-lens 32.

In the second optical path OP2, the parallel light L2a having entered the second superimposing lens 44 passes through the second field lens 46r to be superimposed on the image forming area of the liquid crystal display panel 61r. Since the second lens 44b includes the former and latter lenses 4A and 4B, light is refracted at four lens surfaces. Increasing the lens surfaces in this way allows light to be sufficiently refracted even when the lenses are made with a low-refractivity material. Also, increasing the lens surfaces allows the curvature of the individual lens surfaces to be smaller, which reduces aberration.

As shown in Fig. 8, in the second optical path OP2, the red light LRa is emitted from the F side of the lens element 31a, passes through the lens element 32a, the first lens 44a and the second lens 44b, and enters the E side of the liquid crystal display panel 61r. The red light LRb is emitted from the E side of the lens element 31a, passes through the lens element 32a and the first and second lenses 44a and 44b, and enters the F side of the liquid crystal display panel 61r. That is, assuming that the lights LRa and LRa are not reflected by the first dichroic mirror 41a and the reflection mirrors 42b and 42c, an inverted image of the lens element 31a that is part of the first multi-lens 31 is formed on the liquid crystal display panel 61r. Actually, as shown in Fig. 7, in the second optical path OP2 extending from the light entrance surface of the first multi-lens 31 of the illumination optical system 330 through the liquid crystal display panel 61r to the light emission surface of the cross dichroic prism 70, a plurality of partial lights emitted from the first multi-lens 31 are reflected three times by the first dichroic mirror 41b and the reflection mirrors 42b, 42c, and form an image inverted in the up-down direction on the liquid crystal display panel 61r.

In the above-described projector 310, in the first and third optical paths OP1 and OP3, the image of the lens element 31a of the first multi-lens 31 is formed on the liquid crystal display panels 61g and 61b without being formed on the way to the liquid crystal display panels 61g and 61b. Also, in the second optical path OP2 longer than the first optical path OP1 and others, the image of the lens element 31a of the first multi-lens 31 is formed on the liquid crystal display panel 61r without being formed on the way to the liquid crystal display panel 61r, as with the first optical path OP1. Also, the difference between the number of the reflection surfaces existing in the first optical path OP1 and the number of the reflection surfaces existing in the second optical path OP2 is an even number. Accordingly, even though the length of the first optical path OP1 is different from that of the second optical path OP2, the up-down and left-right directions of the images of the lens element 31a each corresponding to each color having passed through the respective optical paths and having been projected by the projection optical system 80 are the same as each other. Also, since the length of the first optical path OP1 is equal to that of the third optical path OP3, and the difference between the number of the reflection surfaces existing in the first optical path OP1 and the number of the reflection surfaces existing in the third optical path OP3 is an even number, the up-down and left-right directions of the images of the lens element 31a of the illumination optical system 330 each corresponding to each of the green light LG and the blue light LB having passed through the first and third optical paths OP1 and OP3, respectively, and having been projected by the projection optical system 80 are the same as each other with reference to the light emission side of the cross dichroic mirror 141. In this way, the up-down and left-right directions of the projected images each corresponding to each of the lights LG, LR and LB can be the same as one another by previously controlling the relative image forming conditions of the first, second and third optical paths OP1, OP2 and OP3 having lengths different from one another. This can reduce deterioration of white balance and color unevenness in the projection lights from the projector 310 even when the light emission distribution of the light source varies with time, for example.

Also, since the second lens 44b includes the former and latter lenses 4A and 4B, the second lens 44b as a whole can serve as a single precision lens even when the two lenses 4A and 4B are normal ones.

### [Sixth embodiment]

A projector in accordance with a sixth embodiment of the invention is described below. A projector 410 in accordance with the sixth embodiment is a partially modified version of the projector 10 and 310 in accordance with the first and fifth embodiments, so similar components are not specifically described here.

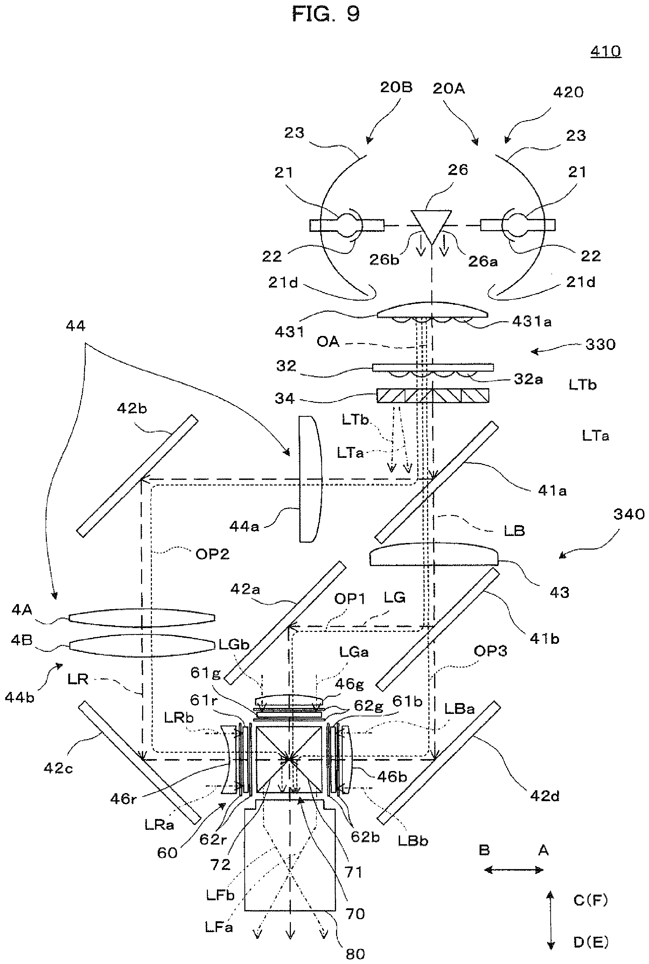

Fig. 9 shows a conceptual structure of an optical system of the projector 410 in accordance with the sixth embodiment. The projector 410 in this embodiment includes a light source lamp unit 420, the illumination optical system 330, the color separation and light guide optical system 340, the light modulator 60, the cross dichroic prism 70, and the projection optical system 80.

The light source lamp unit 420 includes two light source lamps 20A and 20B as the light emission sources, and a reflection prism 26. The reflection prism 26 serves as a light-combining optical system that combines lights emitted from the light source lights.

The two light source lamps 20A and 20B have the same structure, each including the lamp main body 21, the secondary mirror 22 and the primary mirror 23. The two light source lamps 20A and 20B are opposed to each other with the system optical axis OA interposed therebetween in a flat plane parallel with the plane of paper in which the color separation and light guide optical system 340 extends. Light emission openings 21d for the light source lights from the light source lamps 20A and 20B are opposed to each other in a direction perpendicular to the system optical axis OA. The light source lights forwardly emitted from the light source lamps 20A and 20B are converged and bent by corresponding reflection surfaces 26a and 26b of the reflection prism 26, and then combined.

Note that the arrangement of the two light source lamps 20A and 20B is not limited to that shown in this embodiment, but any arrangement may be used as long as the combined light source light is superimposed generally uniformly to enter the subsequent illumination optical system 330.

The reflection prism 26 alone has the function of combining light source lights emitted from the light source lamps 20A and 20B. The reflection prism 26 can bend the light source lights at the adjacent reflection surfaces 26a and 26b as shown in Fig. 9 to combine the light source lights emitted from the lamp main bodies 21 closed to each other. Note that the reflection surfaces 26a and 26b of the reflection prism 26 have aluminum films or dielectric multilayer films deposited thereon, thereby efficiently reflecting visible light.

The illumination optical system 330 is an optical system that divides light emitted from the light source lamp unit 420 into a plurality of partial lights and polarizes the illumination light to a certain direction. The illumination optical system 330 includes a first multi-lens 431, the second multi-lens 32, the polarizer 34, and first and second superimposing lenses 43 and 44.

The first multi-lens 431 has a convex surface on the light entrance side, and collimates diverging light emitted from the reflection prism 26 to be incident on a lens element 431a that is part of the first multi-lens 431.

In the above-described projector 410, in the first and third optical paths OP1 and OP3, the image of the lens element 31a of the first multi-lens 31 is formed on the liquid crystal display panels 61g and 61b without being formed on the way to the liquid crystal display panels 61g and 61b. Also, in the second optical path OP2 longer than the first optical path OP1 and others, the image of the lens element 31a of the first multi-lens 31 is formed on the liquid crystal display panel 61r without being formed on the way to the liquid crystal display panel 61r, as with the first optical path OP1. Also, the difference between the number of the reflection surfaces existing in the first optical path OP1 and the number of the reflection surfaces existing in the second optical path OP2 is an even number. Accordingly, even though the length of the first optical path OP1 is different from that of the second optical path OP2, the up-down and left-right directions of the images of the lens element 31a each corresponding to each color having passed through the respective optical paths and having been projected by the projection optical system 80 are the same as each other. Also, since the length of the first optical path OP1 is equal to that of the third optical path OP3, and the difference between the number of the reflection surfaces existing in the first optical path OP1 and the number of the reflection surfaces existing in the third optical path OP3 is an even number, the up-down and left-right directions of the images of the lens element 31a of the illumination optical system 330 each corresponding to each of the green light LG and the blue light LB having passed through the first and third optical paths OP1 and OP3, respectively, and having been projected by the projection optical system 80 are the same as each other.

When two or more light source lamp units 20 are used, the illuminance distribution of the illumination light illuminating the liquid crystal display panels 61g, 61r and 61b tends to be non-symmetric in the up-down and left-right directions around the system optical axis, but partially spoil this symmetry, due to the individual difference or relative position error between the light source lamps 20A and 20B and the shape, position or the like of the reflection prism 26. However, in this embodiment, the up-down and left-right directions of the projected images each corresponding to each of the lights LG, LR and LB can be the same as one another by previously controlling the relative image forming conditions of the first, second and third optical paths OP1, OP2 and OP3 having lengths different from one another, which reduces color unevenness in the projected image.

When the amount of light from either of the light source lamps 20A and 20B decreases with time, a bias occurs in the illuminance distribution on the first multi-lens 31, which tends to partially spoil the symmetry of the illuminance distribution of the illumination light illuminating the liquid crystal display panels 61g, 61r and 61b. However, in this embodiment, the up-down and left-right directions of the projected images each corresponding to each of the lights LG, LR and LB can be the same as one another by previously controlling the relative image forming conditions of the first, second and third optical paths OP1, OP2 and OP3 having lengths different from one another, which surely prevents color unevenness in the projected image from increasing with time.

While the case in which the amount of lights from the light source lamps 20A and 20B varies with time has been discussed, the deterioration of white balance and color unevenness in the projection lights from the projector 410 can also be reduced when the symmetry of the illuminance distribution of the illumination light is spoiled due to the failure of either of the two light source lamps 20A and 20B.

As discussed, color unevenness can be reduced when only one of the light source lamps 20A and 20B is on. So, in the light source lamp unit 420, the two light source lamps 20A and 20B need not be precisely aligned with respect to the reflection prism 26, which allows the projector 410 to be easily manufactured.

While the invention has been described with reference to the embodiments thereof, the invention is not intended to be limited to the above embodiments, but various modifications may be implemented without departing from the spirit and scope of the invention. For example, the following modifications may be implemented.

While, in the above-described embodiments, the green light LG, red light LR and blue light LB are guided to the first optical path OP1, the second optical path OP2 and the third optical path OP3, respectively, these combinations may be freely changed through the design change of the first and second dichroic mirrors 41a and 41b and the like in the color separation and light guide optical system. For example, in the first embodiment, the blue light LB and the green light LG may be guided to the long third optical path OP3. However, in order to increase the illumination intensity of the projected image, the green light LG is preferably guided to the first optical path OP1.

In the above-described embodiments, the projector includes the three optical paths, the first, second and third optical paths OP1, OP2 and OP3. However, those embodiments can be applied to a projector that includes two optical paths, the first optical path OP1 and the second optical path OP2 longer than the first optical path OP1. For this projector, the up-down and left-right directions of the images each corresponding to each of the color lights projected by the projector can be the same as each other, which reduces deterioration of white balance and color unevenness in the projection lights from the projector, by previously controlling the relative image forming conditions of and the number of reflection in the first optical path OP1 and the second optical path OP2 having lengths different from each other. Furthermore, those embodiments can also be applied to a projector that includes four or more optical paths, some of which may have lengths different from one another, to reduce deterioration of white balance and color unevenness in the projection lights from the projector.

While, in the above-described embodiments, the cross dichroic prism 70 is used for combining illumination lights, a cross dichroic mirror may also be used that is another example of the light combining optical system. While, in the third embodiment, the cross dichroic mirror 141 is used for separating illumination light, a cross dichroic prism may also be used.

While, in the projector 10 and others in accordance with the above-described embodiments, a high-pressure mercury lamp or the like is used for the lamp main body 21 of the light source lamp unit 20 because it can emit high-intensity light throughout the wavelengths of the colors, various types of lamps that can emit generally white illumination light and solid state light-emitting devices such as LED may also be used. Also, for the primary mirror 23, various types of reflectors having parabolic surface or the like, not limited to elliptical surfaces, may be used. The primary mirror 23 having a parabolic surface allows the light source lamp unit 20 to emit parallel light without the concave lens 24 or the like provided at the subsequent stage of the primary mirror 23.

While, in the projector 10 and the like in accordance with the above-described embodiments, the illumination optical system 30, 130, 230 and 330 include the first and second multi-lenses 31 and 32 and the polarizer 34, the first and second multi-lenses 31 and 32 and the like may be removed or replaced by a rod integrator. In this case, the above-described light dividing optical element corresponds to the rod integrator, and the optical system for forming an inverted image of the light emission surface of the rod integrator (inverted image of the illumination optical system) on the light modulator corresponds to a superimposing optical system.

Also, in the invention, the positions of the first superimposing lens 43, the second superimposing lens 44 and the like may be any position that allows the light receiving area of the light modulation unit 60, that is, the image forming areas of the liquid crystal display panels 61g, 61r and 61b to be superimposingly illuminated with a generally uniform illuminance.

The invention is also applicable to both a front-projection projector that projects an image from the viewer side and a rear-projection projector that projects an image from the side opposite to the viewer side.

Also, in the fifth embodiment, the lenses of the first, second and third superimposing lenses 43, 44 and 45 may be common to one another.

## Claims

1. A projector comprising:
a light source (20) that emits light including first color light and second color light;
an illumination optical system (30) that equalizes light emitted from the light source;
a color separation and light guide optical system (40) that separates light emitted from the light source into the first color light and the second color light;
a light modulator (60) including a first light modulator (61g, 61b) and a second light modulator (61r) that are illuminated by the first color light (LG, LB) and the second color light (LR), respectively, separated by the color separation and light guide optical system (40); and
a light combining optical system (70) that combines the first color light (LG, LB) and the second color light (LR) passing through the first light modulator (61g, 61b) and the second light modulator (61r) and entering from a plurality of light receiving portions, respectively, and emitting the combined light from a light emission portion (70a),
wherein the length of a first optical path along which the first color light (LG, LB) is guided from the illumination optical system (30) through the first light modulator to the light emission portion (70a) of the light combining optical system (70) is shorter than the length of a second optical path along which the second color light (LR) is guided from the illumination optical system (30) through the second light modulator (61r) to the light emission portion (70a) of the light combining optical system (70),
wherein the color separation and light guide optical system (40) includes at least one reflection surface,
wherein the difference between the number of the reflection surfaces existing in the first optical path and the number of the reflection surfaces existing in the second optical path is an even number,
**characterized in that**, when the first optical path is replaced by a linear optical path including none of the reflection surfaces, an inverted image of the illumination optical system (30) is formed at the position of the first light modulator (61g, 61b) and an image of the illumination optical system (30) is not formed on the way from the illumination optical system (30) to the first light modulator (61g, 61b), and
wherein, when the second optical path is replaced by a linear optical path including none of the reflection surfaces, an inverted image of the illumination optical system (30) is formed at the position of the second light modulator (61r) and an image of the illumination optical system (30) is not formed on the way from the illumination optical system (30) to the second light modulator (61r).

2. The projector according to claim 1,
wherein the light source (20) emits light including third color light,
wherein the color separation and light guide optical system (40) separates light emitted from the light source (20) into the first color light (LG), the second color light (LR) and the third color light (LB),
wherein the light modulator further includes a third light modulator (61b) that is illuminated by the third color light (LB) separated by the color separation and light guide optical system (40),
wherein the light combining optical system (70) is a cross dichroic prism,
wherein the cross dichroic prism combines the first color light (LG), the second color light (LR) and the third color light (LB) passing through the first light modulator (61g), the second light modulator (61r) and the third light modulator (61b) and entering from a plurality of light entrance surfaces corresponding to the plurality of light receiving portions, respectively, and emitting the combined light from a light emission surface corresponding to the light emission portion (70a),
wherein the length of a third optical path along which the third color light (LB) is guided from the illumination optical system (30) through the third light modulator (61b) to the light emission surface corresponding to the light emission portion of the cross dichroic prism is equal to the length of the first optical path,
wherein the difference between the number of the reflection surfaces existing in the first optical path and the number of the reflection surfaces existing in the third optical path is an even number, and
wherein, when the third optical path is replaced by a linear optical path including none of the reflection surfaces, an inverted image of the illumination optical system (30) is formed at the position of the third light modulator (61b).

3. The projector according to claim 1,
wherein the light source (20) emits light including third color light,
wherein the color separation and light guide optical system (40) separates light emitted from the light source into the first color light (LG), the second color light (LR) and the third color light (LB),
wherein the light modulator further includes a third light modulator (61b) that is illuminated by the third color light separated by the color separation and light guide optical system (40),
wherein the light combining optical system (70) is a cross dichroic prism,
wherein the cross dichroic prism combines the first color light (LG), the second color light (LR) and the third color light (LB) passing through the first light modulator (61g), the second light modulator (61r) and the third light modulator (61b) and entering from a plurality of light entrance surfaces corresponding to the plurality of light receiving portions, respectively, and emitting the combined light from a light emission surface corresponding to the light emission portion,
wherein the length of a third optical path along which the third color light (LB) is guided from the illumination optical system (30) through the third light modulator (61b) to the light emission surface corresponding to the light emission portion of the cross dichroic prism is equal to the length of the second optical path,
wherein the difference between the number of the reflection surfaces existing in the second optical path and the number of the reflection surfaces existing in the third optical path is an even number, and
wherein, when the third optical path is replaced by a linear optical path including none of the reflection surfaces, an inverted image of the illumination optical system is formed at the position of the third light modulator.

4. The projector according to any one of claims 1 to 3,
wherein the illumination optical system includes a light dividing optical element that divides light emitted from the light source into a plurality of partial lights, and a superimposing optical system that superimposes the plurality of partial lights together on the first light modulator and the second light modulator,
wherein the superimposing optical system includes a first superimposing lens (43) that superimposes together a plurality of partial lights of the first color light of the plurality of partial lights on the first light modulator, and a second superimposing lens (44) that superimposes together a plurality of partial lights of the second color light of the plurality of partial lights on the second light modulator,
wherein the first superimposing lens (43) is disposed at a position on the first optical path where the first optical path does not overlap with the second optical path, and
wherein the second superimposing lens (44) is disposed at a position on the second optical path where the second optical path does not overlap with the first optical path.

5. The projector according to claim 2,
wherein the illumination optical system includes a light dividing optical element (31) that divides light emitted from the light source into a plurality of partial lights, and a superimposing optical system that superimposes the plurality of partial lights together on the first light modulator, the second light modulator and the third light modulator,
wherein the superimposing optical system includes a first superimposing lens (43) that superimposes together a plurality of partial lights of the first color light of the plurality of partial lights on the first light modulator and superimposing together a plurality of partial lights of the third color light of the plurality of partial lights on the third light modulator, and a second superimposing lens (44) that superimposes together a plurality of partial lights of the second color light of the plurality of partial lights on the second light modulator,
wherein the first superimposing lens (43) is disposed at a position on the first optical path where the first optical path overlaps with the third optical path and does not overlap with the second optical path, and
wherein the second superimposing lens (44) is disposed at a position on the second optical path where the second optical path does not overlap with the first optical path and the third optical path.

6. The projector according to any one of claims 4 and 5, wherein at least one of the first superimposing lens (43) and the second superimposing lens (44) includes two or more lenses.

7. The projector according to any one of claims 1 to 3,
wherein the illumination optical system (30) includes a light dividing optical element that divides light emitted from the light source into a plurality of partial lights, and a superimposing optical system that superimposes the plurality of partial lights together on the first light modulator and the second light modulator,
wherein the superimposing optical system includes a first superimposing lens (43) that superimposes together a plurality of partial lights of the first color light of the plurality of partial lights on the first light modulator, and a second superimposing lens (44) that superimposes together a plurality of partial lights of the second color light of the plurality of partial lights on the second light modulator,
wherein the first superimposing lens (43) includes two or more lenses,
wherein the second superimposing lens (44) includes two or more lenses,
wherein at least one lens included in the first superimposing lens (43) is a common lens also included in the second superimposing lens, and
the common lens is disposed upstream from the position on which light emitted from the light source is separated into the color lights by the color separation and light guide optical system.

8. The projector according to claim 3,
wherein the illumination optical system (30) includes a light dividing optical element that divides light emitted from the light source into a plurality of partial lights, and a superimposing optical system that superimposes the plurality of partial lights together on the first light modulator, the second light modulator and the third light modulator,
wherein the superimposing optical system includes a first superimposing lens (43) that superimposes together a plurality of partial lights of the first color light of the plurality of partial lights on the first light modulator, a second superimposing lens (44) that superimposes together a plurality of partial lights of the second color light of the plurality of partial lights on the second light modulator, and a third superimposing lens (45) that superimposes together a plurality of partial lights of the third color light of the plurality of partial lights on the third light modulator,
wherein the second superimposing lens (44) includes two or more lenses, and
wherein the third superimposing lens (45) includes two or more lenses.

9. The projector according to any one of claims 4 to 8, wherein the illumination optical system further includes an optical element for converging the plurality of partial lights divided by the light dividing optical element and that is disposed between the light dividing optical element and the superimposing optical system.

10. The projector according to one of claims 1-9,:
wherein the illumination optical system (30) includes a light dividing optical element (31) that divides light emitted from the light source into a plurality of partial lights and a superimposing optical system that superimposes the plurality of partial lights together on the first light modulator (61g) and the second light modulator (61r);
the light combing optical system comprising a cross dichroic prism (70); and
wherein the length of a first optical path along which the first color light is guided from the light dividing optical element through the first light modulator (61g) to the light emission surface of cross dichroic prism is shorter than the length of a second optical path along which the second color light is guided from the light dividing optical element through the second light modulator (61r) to the light emission surface of cross dichroic prism,
wherein, when the first optical path is replaced by a linear optical path including none of the reflection surfaces, an inverted image of the light dividing optical element is formed at the position of the first light modulator and an image of the light dividing optical element is not formed on the way from the light dividing optical element (31) to the first light modulator, and
wherein, when the second optical path is replaced by a linear optical path including none of the reflection surfaces, an inverted image of the light dividing optical element is formed at the position of the second light modulator and an image of the light dividing optical element (31) is not formed on the way from the light dividing optical element to the second light modulator.

11. The projector according to any one of claims 1 to 10, wherein the light source includes two or more light emission sources.

## Patentansprüche

1. Projektor, aufweisend:
eine Lichtquelle (20), die Licht emittiert, das ein erstes Farblicht und ein zweites Farblicht umfasst,
ein Beleuchtungsoptiksystem (30), das ein von der Lichtquelle emittiertes Licht ausrichtet,
ein Farbtrenn- und Lichtführungsoptiksystem (40), das ein von der Lichtquelle emittiertes Licht in das erste Farblicht und das zweite Farblicht trennt,
einen Lichtmodulator (60), der einen ersten Lichtmodulator (61g, 61b) und einen zweiten Lichtmodulator (61r) aufweist, die entsprechend durch das erste Farblicht (LG, LB) und das zweite Farblicht (LR) beleuchtet werden, die durch das Farbtrenn- und Lichtführungsoptiksystem (40) getrennt wurden, und
ein Lichtkombinieroptiksystem (70), das das erste Farblicht (LG, LB) und das zweite Farblicht (LR) kombiniert, die entsprechend durch den ersten Lichtmodulator (61g, 61b) und den zweiten Lichtmodulator (61r) gelangen und von einer Vielzahl von Lichtaufnahmeabschnitten eintreten, und das kombinierte Licht von einem Lichtemissionsabschnitt (70a) emittiert,
wobei die Länge eines ersten optischen Pfades, entlang dem das erste Farblicht (LG, LB) vom Beleuchtungsoptiksystem (30) durch den ersten Lichtmodulator zum Lichtemissionsabschnitt (70a) des Lichtkombinieroptiksystems (70) geführt wird, kürzer ist als die Länge eines zweiten Optikpfades, entlang dem das zweite Farblicht (LR) vom Beleuchtungsoptiksystem (30) durch den zweiten Lichtmodulator (61r) zum Lichtemissionsabschnitt (70a) des Lichtkombinieroptiksystems (70) geführt wird,
wobei das Farbtrenn- und Lichtführungsoptiksystem (40) zumindest eine Reflexionsfläche aufweist,
wobei die Differenz zwischen der Anzahl der im ersten optischen Pfad vorliegenden Reflexionsflächen und der Anzahl der im zweiten optischen Pfad vorliegenden optischen Reflexionsflächen eine gerade Zahl ist,
**dadurch gekennzeichnet, dass**,
wenn der erste optische Pfad durch einen linearen optischen Pfad, der keine der Reflexionsflächen aufweist, ersetzt wird, ein invertiertes Bild des Beleuchtungsoptiksystems (30) an der Position des ersten Lichtmodulators (61g, 61b) ausgebildet wird, und ein Bild des Beleuchtungsoptiksystems (30) nicht auf dem Weg vom Beleuchtungsoptiksystem (30) zum ersten Lichtmodulator (61g, 61b) ausgebildet wird, und
wobei, wenn der zweite optische Pfad durch einen linearen optischen Pfad, der keine der Reflexionsflächen aufweist, ersetzt wird, ein invertiertes Bild des Beleuchtungsoptiksystems (30) an der Position des zweiten Lichtmodulators (61r) ausgebildet wird, und ein Bild des Beleuchtungsoptiksystems (30) nicht auf dem Weg vom Beleuchtungsoptiksystem (30) zum zweiten Lichtmodulator (61r) ausgebildet wird.

2. Projektor gemäß Anspruch 1,
wobei die Lichtquelle (20) Licht emittiert, das ein drittes Farblicht umfasst,
wobei das Farbtrenn- und Lichtführungsoptiksystem (40) ein von der Lichtquelle (20) emittiertes Licht in das erste Farblicht (LG), das zweite Farblicht (LR) und das dritte Farblicht (LB) trennt,
wobei der Lichtmodulator ferner einen dritten Lichtmodulator (61b) umfasst, der durch das dritte Farblicht (LB) beleuchtet wird, das durch das Farbtrenn- und Lichtführungsoptiksystem (40) getrennt wurde,
wobei das Lichtkombinieroptiksystem (70) ein quer-dichroitisches Prisma ist,
wobei das quer-dichroitische Prisma das erste Farblicht (LG), das zweite Farblicht (LR) und das dritte Farblicht (LB) kombiniert, die entsprechend durch den ersten Lichtmodulator (61g), den zweiten Lichtmodulator (61r) und den dritten Lichtmodulator (61b) gelangen und von einer Vielzahl von Lichteintrittsflächen eintreten, die der Vielzahl der Lichtaufnahmeabschnitte entsprechen, und Emittieren des kombinierten Lichts von einer Lichtemissionsfläche, die dem Lichtemissionsabschnitt (70a) entspricht,
wobei die Länge eines dritten optischen Pfades, entlang dem das dritte Farblicht (LB) vom Beleuchtungsoptiksystem (30) durch den dritten Lichtmodulator (61b) zur Lichtemissionsfläche geführt wird, die dem Lichtemissionsabschnitt des quer-dichroitisches Prismas entspricht, gleich der Länge des ersten optischen Pfades ist,
wobei die Differenz zwischen der Anzahl der Reflexionsflächen, die im ersten optischen Pfad vorliegen, und der Anzahl der Reflexionsflächen, die im dritten optischen Pfad vorliegen, eine gerade Zahl ist, und
wobei, wenn der dritte optische Pfad durch einen linearen optischen Pfad ersetzt wird, der keine der Reflexionsflächen aufweist, ein invertiertes Bild des Beleuchtungsoptiksystems (30) an der Position des dritten Lichtmodulators (61b) ausgebildet wird.

3. Projektor gemäß Anspruch 1, wobei
bei dem die Lichtquelle (20) Licht emittiert, das ein drittes Farblicht umfasst, wobei das Farbtrenn- und Lichtführungsoptiksystem (40) ein von der Lichtquelle emittiertes Licht in das erste Farblicht (LG), das zweite Farblicht (LR), und das dritte Farblicht (LB) trennt,
wobei der Lichtmodulator ferner einen dritten Lichtmodulator (61b) aufweist, der durch das dritte Farblicht beleuchtet wird, das durch das Farbtrenn- und Lichtführungsoptiksystem (40) getrennt wurde,
wobei das Lichtkombinieroptiksystem (70) ein quer-dichroitisches Prisma ist,
wobei das quer-dichroitische Prisma das erste Farblicht (LG), das zweite Farblicht (LR) und das dritte Farblicht (LB) kombiniert, das entsprechend durch den ersten Lichtmodulator (61g), den zweiten Lichtmodulator (61r) und den dritten Lichtmodulator (61b) gelangt und von einer Vielzahl von Lichteintrittsflächen eintritt, die der Vielzahl der Lichtaufnahmeabschnitte entspricht, und das kombinierte Licht von einer Lichtemissionsfläche emittiert, die dem Lichtemissionsabschnitt entspricht,
wobei die Länge eines dritten optischen Pfades, entlang dem das dritte Farblicht (LB) vom Beleuchtungsoptiksystem (30) durch den dritten Lichtmodulator (61b) zur Lichtemissionsfläche geführt wird, die dem Lichtemissionsabschnitt des quer-dichroitisches Prismas entspricht, gleich der Länge des zweiten optischen Pfades ist,
wobei die Differenz zwischen der Anzahl der Reflexionsflächen, die im zweiten optischen Pfad vorliegen, und der Anzahl der Reflexionsflächen, die im dritten optischen Pfad vorliegen, eine gerade Zahl ist, und
wenn der dritte optische Pfad durch einen linearen optischen Pfad ersetzt wird, der keine der Reflexionsflächen aufweist, ein invertiertes Bild des Beleuchtungsoptiksystems an den Positionen des dritten Lichtmodulators ausgebildet wird.

4. Projektor gemäß einem der Ansprüche 1 bis 3,
bei dem das Beleuchtungsoptiksystem ein Lichtteilungsoptikelement, das ein von der Lichtquelle emittiertes Licht in eine Vielzahl von Teillichtern aufteilt, und ein Überlagerungsoptiksystem, welches die Vielzahl der Teillichter an dem ersten Lichtmodulator und dem zweiten Lichtmodulator zusammen überlagert, aufweist
wobei das Überlagerungsoptiksystem eine erste Überlagerungslinse (43), die eine Vielzahl von Teillichtern des ersten Farblichts der Vielzahl der Teillichter am ersten Lichtmodulator zusammen überlagert, und eine zweite Überlagerungslinse (44), die eine Vielzahl der Teillichter des zweiten Farblichts der Vielzahl der Teillichter am zweiten Lichtmodulator zusammen überlagert, aufweist,
wobei die erste Überlagerungslinse (43) an einer Position am ersten Optikpfad angeordnet ist, wo der erste Optikpfad nicht mit dem zweiten Optikpfad überlappt, und
wobei die zweite Überlagerungslinse (44) an einer Position am zweiten Optikpfad angeordnet ist, wo der zweite Optikpfad nicht mit dem ersten Optikpfad überlappt.

5. Projektor gemäß Anspruch 2,
wobei das Beleuchtungsoptiksystem ein Lichtteilungsoptikelement (31) aufweist, das ein von der Lichtquelle emittiertes Licht in eine Vielzahl von Teillichtern aufteilt, und ein Überlagerungsoptiksystem, das die Vielzahl der Teillichter am ersten Lichtmodulator, am zweiten Lichtmodulator und am dritten Lichtmodulator zusammen überlagert,
wobei das Überlagerungsoptiksystem eine erste Überlagerungslinse (43), die eine Vielzahl der Teillichter des ersten Farblichts der Vielzahl der Teillichter am ersten Lichtmodulator zusammen überlagert und eine Vielzahl der Teillichter des dritten Farblichts der Vielzahl der Teillichter am dritten Lichtmodulator zusammen überlagert, und eine zweite Überlagerungslinse (44), die eine Vielzahl der Teillichter des zweiten Farblichts der Vielzahl der Teillichter am zweiten Lichtmodulator zusammen überlagert, aufweist,
wobei die erste Überlagerungslinse (43) an einer Position am ersten optischen Pfad angeordnet ist, wo der erste optische Pfad mit dem dritten optischen Pfad überlappt und nicht mit dem zweiten optischen Pfad überlappt, und
wobei die zweite Überlagerungslinse (44) an einer Position am zweiten optischen Pfad angeordnet ist, wo der zweite optische Pfad nicht mit dem ersten optischen Pfad und dritten optischen Pfad überlappt.

6. Projektor gemäß einem der Ansprüche 4 und 5, wobei zumindest eine der ersten Überlagerungslinse (43) und der zweiten Überlagerungslinse (44) zwei oder mehr Linsen aufweist.

7. Projektor gemäß einem der Ansprüche 1 bis 3,
bei dem das Beleuchtungsoptiksystem (30) ein Lichtteilungsoptikelement, das ein von der Lichtquelle emittiertes Licht in eine Vielzahl von Teillichtern aufteilt, und ein Überlagerungsoptiksystem, das die Vielzahl der Teillichter an dem ersten Lichtmodulator und dem zweiten Lichtmodulator zusammen überlagert, aufweist,
wobei das Überlagerungsoptiksystem eine erste Überlagerungslinse (43), die eine Vielzahl der Teillichter des ersten Farblichts der Vielzahl der Teillichter am ersten Lichtmodulator zusammen überlagert, und eine zweite Überlagerungslinse (44), die eine Vielzahl der Teillichter des zweiten Farblichts der Vielzahl der Teillichter am zweiten Lichtmodulator zusammen überlagert, aufweist,
wobei die erste Überlagerungslinse (43) zwei oder mehrere Linsen aufweist,
wobei die zweite Überlagerungslinse (44) zwei oder mehrere Linsen aufweist,
wobei zumindest eine Linse, die in der ersten Überlagerungslinse (43) umfasst ist, eine gemeinsame Linse ist, die ebenso in der zweiten Überlagerungslinse umfasst ist, und
die gemeinsame Linse stromaufwärts von der Position angeordnet ist, an der ein von der Lichtquelle emittiertes Licht durch das Farbtrenn- und Lichtführungsoptiksystem in die Farblichter getrennt wird.

8. Projektor gemäß Anspruch 3, bei dem das Beleuchtungsoptiksystem (30) ein Lichtteilungsoptikelement aufweist, das ein von der Lichtquelle emittiertes Licht in eine Vielzahl von Teillichtern aufteilt, und ein Überlagerungsoptiksystem, das die Vielzahl der Teillichter am ersten Lichtmodulator, am zweiten Lichtmodulator und am dritten Lichtmodulator zusammen überlagert,
wobei das Überlagerungsoptiksystem eine erste Überlagerungslinse (43), die eine Vielzahl der Teillichter des ersten Farblichts der Vielzahl der Teillichter am ersten Lichtmodulator zusammen überlagert, eine zweite Überlagerungslinse (44), die eine Vielzahl der Teillichter des zweiten Farblichts der Vielzahl der Teillichter am zweiten Lichtmodulator zusammen überlagert, und eine dritte Überlagerungslinse (44), die eine Vielzahl der Teillichter des dritten Farblichts der Vielzahl der Teillichter am dritten Lichtmodulator zusammen überlagert, aufweist,
wobei die zweite Überlagerungslinse (44) zwei oder mehrere Linsen aufweist, und wobei die dritte Überlagerungslinse (45) zwei oder mehrere Linsen aufweist.

9. Projektor gemäß einem der Ansprüche 4 bis 8, wobei das Beleuchtungsoptiksystem ferner ein optisches Element zum Konvergieren der Vielzahl der Teillichter aufweist, die durch das Lichtteilungsoptikelement aufgeteilt wurden, und das zwischen dem Lichtteilungsoptikelement und dem Überlagerungsoptiksystem angeordnet ist.

10. Projektor gemäß einem der Ansprüche 1 bis 9:
wobei das Beleuchtungsoptiksystem (30) ein Lichtteilungsoptikelement (31), das ein von der Lichtquelle emittiertes Licht in eine Vielzahl von Teillichtern aufteilt, und ein Überlagerungsoptiksystem, das die Vielzahl der Teillichter am ersten Lichtmodulator (61g) und am zweiten Lichtmodulator (61r) zusammen überlagert, aufweist,
wobei das Lichtkombinieroptiksystem ein quer-dichroitisches Prisma (70) umfasst, und
wobei die Länge eines ersten optischen Pfades, entlang dem das erste Farblicht vom Lichtteilungsoptikelement durch den ersten Lichtmodulator (61g) zur Lichtemissionsfläche des quer-dichroitischen Prismas geführt wird, kürzer ist als die Länge eines zweiten optischen Pfades, entlang dem das zweite Farblicht vom Lichtteilungsoptikelement durch den zweiten Lichtmodulator (61r) zur Lichtemissionsfläche des quer-dichroitischen Prismas geführt wird, wobei
wenn der erste optische Pfad durch einen linearen optischen Pfad ersetzt wird, der keine der Reflexionsflächen aufweist, ein invertiertes Bild des Lichtteilungsoptikelements an der Position des ersten Lichtmodulators ausgebildet wird und ein Bild des Lichtteilungsoptikelements nicht am Weg vom Lichtteilungsoptikelement (31) zum ersten Lichtmodulator ausgebildet wird, und
wobei, wenn der zweite optische Pfad durch einen linearen optischen Pfad ersetzt wird, der keine der Reflexionsflächen aufweist, ein invertiertes Bild des Lichtteilungsoptikelements an der Position des zweiten Lichtmodulators ausgebildet wird und ein Bild des Lichtteilungsoptikelements (31) nicht am Weg vom Lichtteilungsoptikelement zum zweiten Lichtmodulator ausgebildet wird.

11. Projektor gemäß einem der Ansprüche 1 bis 10, bei dem die Lichtquelle zwei oder mehrere Lichtemissionsquellen aufweist.

## Revendications

1. Projecteur comprenant :
une source de lumière (20) qui émet une lumière incluant une première lumière de couleur et une deuxième lumière de couleur;
un système optique d'éclairage (30) qui égalise la lumière émise à partir de la source de lumière;
un système optique de séparation de couleurs et de guidage de lumière (40) qui sépare la lumière émise en provenance de la source de lumière en une première lumière de couleur et en une deuxième lumière de couleur ;
un modulateur de lumière (60) incluant un premier modulateur de lumière (61g, 61b) et un deuxième modulateur de lumière (61r) qui sont respectivement éclairés par la première lumière de couleur (LG, LB) et la deuxième lumière de couleur (LR), séparées par le système optique de séparation de couleurs et de guidage de lumière (40) ; et
un système optique de combinaison de lumières (70) qui combine la première lumière de couleur (LG, LB) et la deuxième lumière de couleur (LR) passant respectivement à travers le premier modulateur de lumière (61g, 61b) et le deuxième modulateur de lumière (61r) et entrant en provenance d'une pluralité de parties de réception de lumière, et émettant la lumière combinée depuis une partie d'émission de lumière (70a),
dans lequel la longueur d'un premier chemin optique le long duquel la première lumière de couleur (LG, LB) est guidée depuis le système optique d'éclairage (30) à travers le premier modulateur de lumière jusqu'à la partie d'émission de lumière (70a) du système optique de combinaison de lumières (70) est plus courte que la longueur d'un deuxième chemin optique le long duquel la deuxième lumière de couleur (LR) est guidée depuis le système optique d'éclairage (30) à travers le deuxième modulateur de lumière (61r) jusqu'à la partie d'émission de lumière (70a) du système optique de combinaison de lumières (70),
dans lequel le système optique de séparation de couleurs et de guidage de lumière (40) inclut au moins une surface de réflexion,
dans lequel la différence entre le nombre des surfaces de réflexion existant dans le premier chemin optique et le nombre des surfaces de réflexion existant dans le deuxième chemin optique est un nombre pair,
**caractérisé en ce que**,
lorsque le premier chemin optique est remplacé par un chemin optique linéaire n'incluant aucune des surfaces de réflexion, une image inversée du système optique d'éclairage (30) est formée à la position du premier modulateur de lumière (61g, 61b) et une image du système optique d'éclairage (30) n'est pas formée sur la route allant du système optique d'éclairage (30) au premier modulateur de lumière (61g, 61b), et
dans lequel, lorsque le deuxième chemin optique est remplacé par un chemin optique linéaire n'incluant aucune des surfaces de réflexion, une image inversée du système optique d'éclairage (30) est formée à la position du deuxième modulateur de lumière (61r) et une image du système optique d'éclairage (30) n'est pas formée sur la route allant du système optique d'éclairage (30) au deuxième modulateur de lumière (61r).

2. Projecteur selon la revendication 1,
dans lequel la source de lumière (20) émet une lumière incluant une troisième lumière de couleur,
dans lequel le système optique de séparation de couleurs et de guidage de lumière (40) sépare la lumière émise à partir de la source de lumière (20) en la première lumière de couleur (LG), la deuxième lumière de couleur (LR) et la troisième lumière de couleur (LB),
dans lequel le modulateur de lumière inclut en outre un troisième modulateur de lumière (61b) qui est éclairé par la troisième lumière de couleur (LB) séparée par le système optique de séparation de couleurs et de guidage de lumière (40),
dans lequel le système optique de combinaison de lumières (70) est un prisme dichroïque croisé,
dans lequel le prisme dichroïque croisé combine la première lumière de couleur (LG), la deuxième lumière de couleur (LR) et la troisième lumière de couleur (LB) passant à travers le premier modulateur de lumière (61g), le deuxième modulateur de lumière (61r) et le troisième modulateur de lumière (61b) et entrant à partir d'une pluralité de surfaces d'entrée de lumière correspondant respectivement à la pluralité de parties de réception de lumière, et émettant la lumière combinée à partir d'une surface d'émission de lumière correspondant à la partie d'émission de lumière (70a),
dans lequel la longueur d'un troisième chemin optique le long duquel la troisième lumière de couleur (LB) est guidée depuis le système optique d'éclairage (30) à travers le troisième modulateur de lumière (61b) jusqu'à la surface d'émission de lumière correspondant à la partie d'émission de lumière du prisme dichroïque croisé est égale à la longueur du premier chemin optique,
dans lequel la différence entre le nombre des surfaces de réflexion existant dans le premier chemin optique et le nombre des surfaces de réflexion existant dans le troisième chemin optique est un nombre pair, et
dans lequel, lorsque le troisième chemin optique est remplacé par un chemin optique linéaire n'incluant aucune des surfaces de réflexion, une image inversée du système optique d'éclairage (30) est formée à la position du troisième modulateur de lumière (61b).

3. Projecteur selon la revendication 1,
dans lequel la source de lumière (20) émet une lumière incluant une troisième lumière de couleur,
dans lequel le système optique de séparation de couleurs et de guidage de lumière (40) sépare la lumière émise à partir de la source de lumière en la première lumière de couleur (LG), la deuxième lumière de couleur (LR) et la troisième lumière de couleur (LB),
dans lequel le modulateur de lumière inclut en outre un troisième modulateur de lumière (61b) qui est éclairé par la troisième lumière de couleur séparée par le système optique de séparation de couleurs et de guidage de lumière (40),
dans lequel le système optique de combinaison de lumières (70) est un prisme dichroïque croisé,
dans lequel le prisme dichroïque croisé combine la première lumière de couleur (LG), la deuxième lumière de couleur (LR) et la troisième lumière de couleur (LB) passant par le premier modulateur de lumière (61g), le deuxième modulateur de lumière (61r) et le troisième modulateur de lumière (61b) et entrant depuis une pluralité de surfaces d'entrée de lumière correspondant respectivement à la pluralité de parties de réception de lumière, et émettant la lumière combinée à partir d'une surface d'émission de lumière correspondant à la partie d'émission de lumière,
dans lequel la longueur d'un troisième chemin optique le long duquel la troisième lumière de couleur (LB) est guidée depuis le système optique d'éclairage (30) à travers le troisième modulateur de lumière (61b) jusqu'à la surface d'émission de lumière correspondant à la partie d'émission de lumière du prisme dichroïque croisé est égale à la longueur du deuxième chemin optique,
dans lequel la différence entre le nombre des surfaces de réflexion existant dans le deuxième chemin optique et le nombre des surfaces de réflexion existant dans le troisième chemin optique est un nombre pair, et
dans lequel, lorsque le troisième chemin optique est remplacé par un chemin optique linéaire n'incluant aucune des surfaces de réflexion, une image inversée du système optique d'éclairage est formée à la position du troisième modulateur de lumière.

4. Projecteur selon l'une quelconque des revendications 1 à 3,
dans lequel le système optique d'éclairage inclut un élément optique de division de lumière qui divise la lumière émise à partir de la source de lumière en une pluralité de lumières partielles, et un système optique de superposition qui superpose la pluralité de lumières partielles ensemble sur le premier modulateur de lumière et le deuxième modulateur de lumière,
dans lequel le système optique de superposition inclut une première lentille de superposition (43) qui superpose ensemble une pluralité de lumières partielles de la première lumière de couleur de la pluralité de lumières partielles sur le premier modulateur de lumière, et une deuxième lentille de superposition (44) qui superpose ensemble une pluralité de lumières partielles de la deuxième lumière de couleur de la pluralité de lumières partielles sur le deuxième modulateur de lumière,
dans lequel la première lentille de superposition (43) est disposée à une position sur le premier chemin optique où le premier chemin optique ne chevauche pas le deuxième chemin optique, et
dans lequel la deuxième lentille de superposition (44) est disposée à une position sur le deuxième chemin optique où le deuxième chemin optique ne chevauche pas le premier chemin optique.

5. Projecteur selon la revendication 2,
dans lequel le système optique d'éclairage inclut un élément optique de division de lumière (31) qui divise une lumière émise à partir de la source de lumière en une pluralité de lumières partielles, et un système optique de superposition qui superpose la pluralité de lumières partielles ensemble sur le premier modulateur de lumière, le deuxième modulateur de lumière et le troisième modulateur de lumière,
dans lequel le système optique de superposition inclut une première lentille de superposition (43) qui superpose ensemble une pluralité de lumières partielles de la première lumière de couleur de la pluralité de lumières partielles sur le premier modulateur de lumière et superposant ensemble une pluralité de lumières partielles de la troisième lumière de couleur de la pluralité de lumières partielles sur le troisième modulateur de lumière, et une deuxième lentille de superposition (44) qui superpose ensemble une pluralité de lumières partielles de la deuxième lumière de couleur de la pluralité de lumières partielles sur le deuxième modulateur de lumière,
dans lequel la première lentille de superposition (43) est disposée à une position sur le premier chemin optique où le premier chemin optique chevauche le troisième chemin optique et ne chevauche pas le deuxième chemin optique, et
dans lequel la deuxième lentille de superposition (44) est disposée à une position sur le deuxième chemin optique où le deuxième chemin optique ne chevauche pas le premier chemin optique et le troisième chemin optique.

6. Projecteur selon l'une quelconque des revendications 4 et 5, dans lequel au moins une de la première lentille de superposition (43) et de la deuxième lentille de superposition (44) inclut deux lentilles ou plus.

7. Projecteur selon l'une quelconque des revendications 1 à 3,
dans lequel le système optique d'éclairage (30) inclut un élément optique de division de lumière qui divise une lumière émise à partir de la source de lumière en une pluralité de lumières partielles, et un système optique de superposition qui superpose la pluralité de lumières partielles ensemble sur le premier modulateur de lumière et le deuxième modulateur de lumière,
dans lequel le système optique de superposition inclut une première lentille de superposition (43) qui superpose ensemble une pluralité de lumières partielles de la première lumière de couleur de la pluralité de lumières partielles sur le premier modulateur de lumière, et une deuxième lentille de superposition (44) qui superpose ensemble une pluralité de lumières partielles de la deuxième lumière de couleur de la pluralité de lumières partielles sur le deuxième modulateur de lumière,
dans lequel la première lentille de superposition (43) inclut deux lentilles ou plus,
dans lequel la deuxième lentille de superposition (44) inclut deux lentilles ou plus,
dans lequel au moins une lentille incluse dans la première lentille de superposition (43) est une lentille commune également incluse dans la deuxième lentille de superposition, et
la lentille commune est disposée en amont de la position sur laquelle une lumière émise à partir de la source de lumière est séparée en lumières de couleur par le système optique de séparation de couleurs et de guidage de lumière.

8. Projecteur selon la revendication 3,
dans lequel le système optique d'éclairage (30) inclut un élément optique de division de lumière qui divise une lumière émise à partir de la source de lumière en une pluralité de lumières partielles, et un système optique de superposition qui superpose la pluralité de lumières partielles ensemble sur le premier modulateur de lumière, le deuxième modulateur de lumière et le troisième modulateur de lumière,
dans lequel le système optique de superposition inclut une première lentille de superposition (43) qui superpose ensemble une pluralité de lumières partielles de la première lumière de couleur de la pluralité de lumières partielles sur le premier modulateur de lumière, une deuxième lentille de superposition (44) qui superpose ensemble une pluralité de lumières partielles de la deuxième lumière de couleur de la pluralité de lumières partielles sur le deuxième modulateur de lumière, et une troisième lentille de superposition (45) qui superpose ensemble une pluralité de lumières partielles de la troisième lumière de couleur de la pluralité de lumières partielles sur le troisième modulateur de lumière,
dans lequel la deuxième lentille de superposition (44) inclut deux lentilles ou plus, et
dans lequel la troisième lentille de superposition (45) inclut deux lentilles ou plus.

9. Projecteur selon l'une quelconque des revendications 4 à 8, dans lequel le système optique d'éclairage inclut en outre un élément optique pour faire converger la pluralité de lumières partielles divisées par l'élément optique de division de lumière et qui est disposé entre l'élément optique de division de lumière et le système optique de superposition.

10. Projecteur selon l'une quelconque des revendications 1 à 9 :
dans lequel le système optique d'éclairage (30) inclut un élément optique de division de lumière (31) qui divise une lumière émise à partir de la source de lumière en une pluralité de lumières partielles et un système optique de superposition qui superpose la pluralité de lumières partielles ensemble sur le premier modulateur de lumière (61g) et le deuxième modulateur de lumière (61r) ;
le système optique de combinaison de lumière comprenant un prisme dichroïque croisé (70) ; et
dans lequel la longueur d'un premier chemin optique le long duquel la première lumière de couleur est guidée depuis l'élément optique de division de lumière à travers le premier modulateur de lumière (61g) jusqu'à la surface d'émission de lumière de prisme dichroïque croisé est plus courte que la longueur d'un deuxième chemin optique le long duquel la deuxième lumière de couleur est guidée depuis l'élément optique de division de lumière à travers le deuxième modulateur de lumière (61r) jusqu'à la surface d'émission de lumière de prisme dichroïque croisé,
dans lequel, lorsque le premier chemin optique est remplacé par un chemin optique linéaire n'incluant aucune des surfaces de réflexion, une image inversée de l'élément optique de division de lumière est formée à la position du premier modulateur de lumière et une image de l'élément optique de division de lumière n'est pas formée sur la route allant de l'élément optique de division de lumière (31) jusqu'au premier modulateur de lumière, et
dans lequel, lorsque le deuxième chemin optique est remplacé par un chemin optique linéaire n'incluant aucune des surfaces de réflexion, une image inversée de l'élément optique de division de lumière est formée à la position du deuxième modulateur de lumière et une image de l'élément optique de division de lumière (31) n'est pas formée sur la route allant de l'élément optique de division de lumière jusqu'au deuxième modulateur de lumière.

11. Projecteur selon l'une quelconque des revendications 1 à 10, dans lequel la source de lumière inclut deux sources d'émission de lumière ou plus.
